# EUROPEAN PATENT APPLICATION

(11) **EP 2 684 692 A1**
(43) Date of publication of application: **15.01.2014**
(21) Application number: 12803500.3
(22) Date of filing: 29.08.2012
(51) Int. Cl.: B32B 27/18, B32B 27/12

(54) **MULTILAYER SHEET, HEAT-RETAINING STRUCTURE PROVIDED WITH SAME, AND METHOD FOR PRODUCING MULTILAYER SHEET**

(30) Priority: 18.04.2012 WO PCT/JP2012/060395; 04.06.2012 WO PCT/JP2012/064377
(71) Applicant: Ohshin MLP Co., Ltd, Echizen-shi Fukui 915-0052 (JP)
(72) Inventor: OTA, Keizo, Echizen-shi Fukui 915-0052 (JP)
(74) Representative: Giovannini, Francesca
(86) International application number: PCT/JP2012/071785
(87) International publication number: WO 2013/157156

(57) **Abstract**

The multi-layered sheet of the present invention is characterized by comprising a layer of a moisture-permeable base material and a layer(s) of a moisture-permeable resin which has(have) been formed on at least one surface of the layer of the moisture-permeable base material, wherein the moisture-permeable resin may also be found inside the layer of the moisture-permeable base material and the moisture-permeable resin comprises a resin that adheres to the moisture-permeable base material and a water-insoluble powdery or granular material that generates heat by moisture absorption and that is a hydrolysate of a substance derived from a plant and/or hydrolysate of a substance derived from an animal, wherein in the total amount of the moisture-permeable resin, the amount of the resin that adheres to the moisture-permeable base material is 20 to 80 mass % and the amount of the water-insoluble powdery or granular material that generates heat by moisture absorption is 80 to 20 mass %, and is excellent in heat-retaining property. The thermal structure of the present invention comprises the multi-layered sheet as the whole of or as a part of its constituent elements, and is for example bedclothes.

## Description

### Technical field

The present invention relates to a multi-layered sheet having an excellent heat-retaining property in which an exothermic property by moisture absorption is used, and a process for producing it, and a thermal structure comprising the multi-layered sheet as the whole of or as a part of the constituent elements of the thermal structure, such as bedclothes and warm clothes.

### Background art

To use earth energy resources little by little, a method for retaining heat or warming is attracted attention in which energy is not used or by which the amount of energy used is saved. Under this background, it is desired to obtain sufficient warmth by bedclothes. In this case, the room interior is not warmed before going to bed or during sleep.

It is known that metals such as aluminum are effective for heat retention and structures to which heat-retention performance by a metal is applied are publicly known. For example, Patent literature 1 discloses a sheet-like structure for heat retention comprising a stretchable and moisture-absorbable or moisture-permeable base material (specifically, a knit fabric, a woven fabric, a non-woven fabric, paper, or a plastic sheet), a layer of a resin which has been made by applying the resin onto one surface of the base material wherein an aluminum powder or fine pieces of aluminum foil is(are) dispersed in the layer of the resin, and a sheet of a thermoplastic resin that covers the surface of the layer of the resin. This sheet-like structure for heat retention is used by applying it to a human body or by putting it in a storing part that has been formed in clothes. The structure is not planned to be subjected to washing.

Patent literature 2 discloses a metal-containing cloth having a thin-film layer of a metal (such as aluminum) and a layer comprising a colorant, which layers have been made on at least one surface of the cloth, in which the thin-film layer of a metal and the layer comprising a colorant are formed at a thread portion that constitutes a surface of the cloth, and the cloth has an air permeability of 0.5 cc/cm²/sec. or above at 125 Pa. The features of this cloth are excellent in thermal properties, and also excellent in design, flexibility, and air permeability. However, if this cloth is washed, the aluminum transfers in the form of aluminum hydroxide.

Instead of heat-retaining performance by a metal, warming for which a principle of an exothermic property by absorbing moisture is applied is also publicly known. For example, Patent literatures 3 and 4 disclose that poly(carboxylic acid)-treated cellulose fiber that has been obtained by treating cellulose fiber with poly(carboxylic acid) shows an exothermic property by absorbing moisture. The poly(carboxylic acid) that has been adhered to the cellulose fiber transfers by washing, namely, the poly(carboxylic acid)-treated cellulose fiber does not have washing resistance. To improve washing resistance, heat treatment and soaping treatment (Patent literature 3), curing treatment and acid treatment (Patent literature 4) and the like have been tried. However, by the treatments described above, sufficient washing resistance has not been attained.

Patent literature 3 also describes that the amount of heat generation by untreated cellulose fiber is insufficient to feel warmth at wearing clothes, and this is the cause that a human body feels cool at wearing cotton clothes. Patent literature 5 also describes that the cellulose fiber has a disadvantage that a human body feels cool when the cellulose fiber contacts to skin, because the cellulose fiber is not excellent in heat-retaining property as compared to wool.

Patent literature 6 discloses an invention of outer garment in which a reverse of a texture is coated with a window-proof and waterproof resin comprising as a granular additive a material that has, e.g., moisture absorptive and emission properties. Examples of the granular additives include collagen fiber, sea sponge, chitin, cellulose, gelatin, wool, and silk.

Patent literature 7 discloses an invention of a novel composition for water-repellent treatment of clothes characterized by comprising, per 100 parts by weight of solid components of a resin composition, 5 to 500 parts by weight of a fine powder of feather, at least.

Patent literature 8 discloses a surface layer of a synthetic resin comprising organic filler such as a cellulose powder, a cork powder, and a wood powder.

Patent literature 9 discloses an invention of a heat-storage fiber structure characterized in that heat-storage capsules, in which microcapsules include a heat-storage material, are adhered to a fiber structure by using a resin binder. Patent literature 9 also describes for a purpose of giving moisture absorptive and emission properties, a natural organic fine powder such as a collagen powder, a silk powder, a wool powder, a cellulose powder, a chitin powder, or a soy been powder may be contained in the heat-storage fiber structure.

Patent literature 10 discloses an invention of a coating composition for fiber materials characterized by comprising an aqueous solution of a polypeptide having a low molecular weight that has been produced by hydrolyzing silk fibroin, and an aqueous binder that cures at a temperature of 120°C or lower. Patent literature 10 describes that this composition is contaminated with aluminun by itself, or a far-infrared ray radiation ceramics such as a complex or an oxide of aluminum.

### Prior art literatures

### Patent literatures

Patent literature 1: Japanese utility model gazette Heisei 6 (1994)-3570
Patent literature 2: Japanese patent early-publication No. 2005-169970
Patent literature 3: Japanese patent early-publication No. 2000-256962
Patent literature 4: Japanese patent early-publication No. 2004 - 36025
Patent literature 5: Japanese patent early-publication No. 2010 - 31434
Patent literature 6: Japanese patent early-publication No. Heisei 6 (1994) - 123002
Patent literature 7: Japanese patent early-publication No. 2001 - 3262
Patent literature 8: Japanese patent early-publication No. Heisei 8 (1996) - 84653
Patent literature 9: WO2001/092010
Patent literature 10: Japanese patent early-publication No. Heisei 10 (1998) - 212456

### General description of invention

### Problems to be solved by invention

To save energy, bedclothes and the like that provide sufficient warmth are required. To sleep under a quiet environment, we do not want to use, for example, goods comprising metal foil. This is because a sound disturbs his sleep, of which sound is resulted when pieces of the metal foil are rubbed each other. The bedclothes such as sheets and blankets are repeatedly washed. Thus, if aluminum is used, it is required to try a measure by which the aluminum does not transfer into water by washing. Also, it is not preferable to use poly(carboxylic acid)-treated fiber in light of washing resistance. The purpose of the present invention is to provide a multi-layered sheet having an excellent heat-retaining property, in which an art that differs from the above-described prior arts is applied, specifically a powdery or granular material that shows an exothermic property by absorbing moisture is used, and a process for producing the multi-layered sheet, and a thermal structure comprising the multi-layered sheet.

### Means for solving problems

The inventor of the present invention has extremely studied to solve the problems described above. As a result, surprisingly, he has found that by forming a layer of a moisture-permeable resin comprising a specific water-insoluble powdery or granular material that generates heat by moisture absorption on at least one surface of a moisture-permeable base material such as a cloth and a polymer film, an excellent heat-retaining property can be developed based on the property of the powdery or granular material that generates heat by moisture absorption. Thus, he has accomplished the present invention.

Namely, the present invention relates to a multi-layered sheet characterized by comprising a layer of a moisture-permeable base material and a layer(s) of a moisture-permeable resin which has(have) been formed on at least one surface of the layer of the moisture-permeable base material, wherein the moisture-permeable resin may also be found inside the layer of the moisture-permeable base material and the moisture-permeable resin comprises a resin that adheres to the moisture-permeable base material and a water-insoluble powdery or granular material that generates heat by moisture absorption and that is hydrolysate of a substance derived from a plant and/or hydrolysate of a substance derived from an animal, wherein in the total amount of the moisture-permeable resin, the amount of the resin that adheres to the moisture-permeable base material is 20 to 80 mass % and the amount of the water-insoluble powdery or granular material that generates heat by moisture absorption is 80 to 20 mass %. For use in which flexibility is required, it is preferable to form the layer of the moisture-permeable resin on only one surface of the layer of the moisture-permeable base material.

Amount of the water-insoluble powdery or granular material that generates heat by moisture absorption may be 5 to 100 g/m². The water-insoluble powdery or granular material that generates heat by moisture absorption is preferably a powder of hydrolysate of cellulose, especially a powder of hydrolysate of pulp cellulose. The water-insoluble powdery or granular material that generates heat by moisture absorption is preferably also a powder of hydrolysate of a protein that is derived from an animal.

The resin that adheres to the moisture-permeable base material is preferably an acrylic resin. In this case the moisture-permeable resin may be one that has been formed by using a composition, which composition has been made by adding a water-insoluble powdery or granular material that generates heat by moisture absorption to an acrylic binder comprising as a main component an acrylic monomer (namely, a precursor of an acrylic resin), or may be another one that has been formed by using another composition, which composition has been made by adding a water-insoluble powdery or granular material that generates heat by moisture absorption to an adhesive comprising as a main component an acrylic resin.

The multi-layered sheet of the present invention includes a sheet wherein in addition to the layer of a moisture-permeable base material and the layer of a moisture-permeable resin, there is a moisture-permeable polymer film (I), or there is a knit fabric, a woven fabric, or a moisture-permeable non-woven fabric, on one or both surface(s) of the layer(s) of the moisture-permeable resin.

The moisture-permeability (JIS K7129 (Method A); Lyssy Method; 40° C; 90%RH) of the moisture-permeable polymer film (I) is preferably 400 g/m²/24 hours or above.

The moisture-permeable polymer film (I) is preferably a moisture-permeable polyurethane film, especially a waterproof and moisture-permeable polyurethane film.

If the multi-layered sheet of the present invention is a sheet having a a moisture-permeable polymer film(s) (I) on one or both surface(s) of the layer(s) of the moisture-permeable resin, it may be an embodiment wherein there is(are) further a knit fabric(s), a woven fabric(s), or a moisture-permeable non-woven fabric(s) outside the one or both moisture-permeable polymer film(s) (I) via a layer of a moisture-permeable adhesive.

The multi-layered sheet of the present invention includes an embodiment wherein the moisture-permeable resin further comprises an aluminum powder and the amount of the aluminum powder is 40 mass% or less of the total amount of the moisture-permeable resin. If the aluminum powder is used, it is preferable that waterproof and moisture-permeable polymer films (I), (I) are set on both sides of the layer of the moisture-permeable resin comprising the aluminum powder to prevent dissolution of the aluminum powder during washing. In this case, the layer of the moisture-permeable resin comprising the aluminum powder may not directly contact to the waterproof and moisture-permeable polymer films (I), (I). Namely, between the layer of the moisture-permeable resin comprising the aluminum powder and the waterproof and moisture-permeable polymer film (I), there may be another layer.

The present invention also relates to a thermal structure characterized by comprising a multi-layered sheet of any embodiment among those described above.

The present invention also relates to a process for producing a multi-layered sheet characterized by comprising a step of applying to a moisture-permeable base material a composition comprising a resin that adheres to the moisture-permeable base material or a precursor of the resin and a water-insoluble powdery or granular material that generates heat by moisture absorption and that is hydrolysate of a substance derived from a plant and/or hydrolysate of a substance derived from an animal in an amount of 10 to 200 g/m² and a step of forming a moisture-permeable resin by setting the resin that adheres to the moisture-permeable base material or by curing the precursor of the resin, wherein the moisture-permeable resin thus formed comprises, in the total amount of it, the resin that adheres to the moisture-permeable base material in an amount of 20 to 80 mass % and the water-insoluble powdery or granular material that generates heat by moisture absorption in an amount of 80 to 20 mass %.

In the process for producing a multi-layered sheet, the step of applying the composition described above is preferably performed by a machine-coating and in this case the amount of application is preferably 10 to 50 g/m².

### Effect of invention

According to the present invention, a multi-layered sheet that shows sufficient warmth is provided because an exothermic effect based on moisture absorption is developed by using a powdery or granular material that generates heat by moisture absorption. And a thermal structure comprising the multi-layered sheet as the whole of or as a part of its constituent elements, such as bedclothes, is also provided.

Because the multi-layered sheet and the thermal structure are excellent in washing resistance, a product cycle as same as those of prior art bedclothes is attained.

If an aluminum powder is also contained in the moisture-permeable resin, the heat-retaining performance is further enhanced. Also, if the moisture-permeable base material comprises a raised knit fabric, the heat-retaining performance is enhanced. If the raised knit fabric is made of microfiber, the heat-retaining performance is further enhanced.

Although the amount of the powdery or granular material that generates heat by moisture absorption is extremely a little, in which the powdery or granular material is contained in the moisture-permeable resin which has(have) been formed on the surface(s) of the moisture-permeable base material in the multi-layered sheet of the present invention, the multi-layered sheet of the present invention can realize warmth as same as those of feather quilt and woolen quilt. Thus, the present invention contributes to resource saving.

### Brief description of drawings

[Figure 1] It is a schematic, cross-sectional view that shows one example of the multi-layered sheet of the present invention.
[Figure 2] It is a schematic, cross-sectional view that shows another example of the multi-layered sheet of the present invention.
[Figure 3] It is a schematic, cross-sectional view that shows still another example of the multi-layered sheet of the present invention.
[Figure 4] It is a schematic, cross-sectional view that shows still another example of the multi-layered sheet of the present invention.
[Figure 5] It is a schematic, cross-sectional view that shows still another example of the multi-layered sheet of the present invention.
[Figure 6] It is a schematic, cross-sectional view that shows still another example of the multi-layered sheet of the present invention.
[Figure 7] It is a graph that shows results of determinations of heat by moisture absorption of powders of hydrolysate of cellulose.
[Figure 8] It is a graph that shows results of determinations of heat by moisture absorption of a multi-layered sheet according to the present invention and blank.
[Figure 9] It is a graph that shows results of determinations of heat by moisture absorption of a multi-layered sheet according to the present invention and blank.
[Figure 10] It is a schematic view that shows the situation during determining a temperature of bedclothes in the case where a human slept using a thermal structure of the present invention.
[Figure 11] It is a graph that shows results of determinations of temperatures in the cases where a human slept using a thermal structure of the present invention and a thermal structure of blank, wherein the temperatures were determined between bedclothes and a human body.
[Figure 12] It is a graph that shows results of determinations of heat by moisture absorption of a multi-layered sheet according to the present invention and blank.
[Figure 13] It is a graph that shows results of determinations of heat by moisture absorption of a multi-layered sheet according to the present invention and blank.
[Figure 14] It is a graph that shows results of determinations of heat by moisture absorption of a powder of hydrolysate of wool and a powder of hydrolysate of cellulose.
[Figure 15] It is a graph that shows results of determinations of heat by moisture absorption of a multi-layered sheet according to the present invention and blank.
[Figure 16] It is a graph that shows results of determinations of temperatures in the cases where a human slept using a thermal structure of the present invention and a thermal structure of blank, wherein the temperatures were determined between bedclothes and a human body.
[Figure 17] It is a graph that shows results of determinations of heat by moisture absorption of a multi-layered sheet of a comparative example (using a powder of unhydrolyzed cellulose) and blank.
[Figure 18] It is a graph that shows results of determinations of heat by moisture absorption of a multi-layered sheet according to the present invention (using a powder of hydrolysate of wool) and a multi-layered sheet of a comparative example (using a powder of unhydrolyzed wool).

### Mode for carrying out invention

First, the multi-layered sheet according to the present invention will be explained by referring to figures.

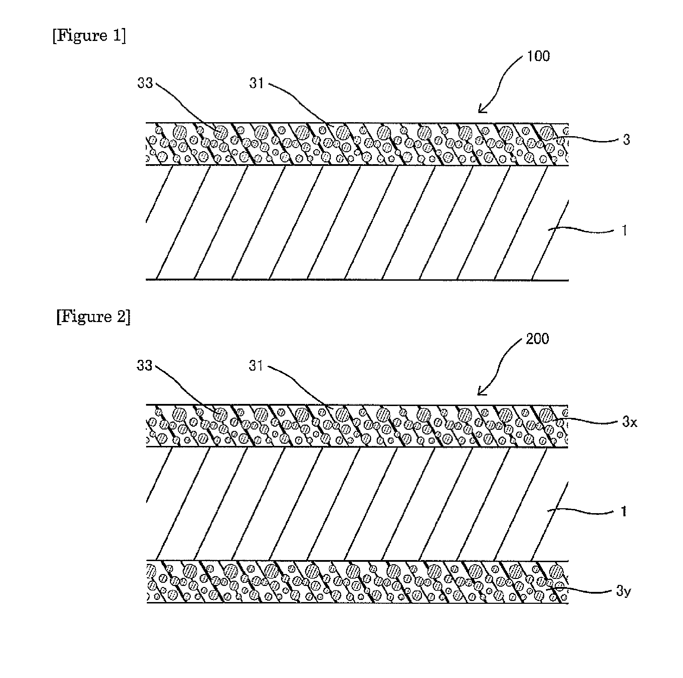

Figure 1 is a schematic, cross-sectional view that shows one example of the multi-layered sheet of the present invention. The multi-layered sheet 100 of the present invention comprises a layer 1 of a moisture-permeable base material and a layer 3 of a moisture-permeable resin which has been formed on one surface of the layer 1 of the moisture-permeable base material. Figure 2 is a schematic, cross-sectional view that shows another example of the multi-layered sheet of the present invention. The multi-layered sheet 200 of the present invention comprises a layer 1 of a moisture-permeable base material and layers 3x, 3y of a moisture-permeable resin which have been formed on both surfaces of the layer 1 of the moisture-permeable base material. The layers 3, 3x, 3y of the moisture-permeable resin comprise a resin 31 that adheres to the moisture-permeable base material and a powder 33 of hydrolysate of cellulose.

In the multi-layered sheets 100 and 200, the border of the layer 1 of the moisture-permeable base material and the layer 3, 3x, or 3y of the moisture-permeable resin is drawn straight. However, the border may be ambiguous. In other words, the moisture-permeable resin comprising the resin 31 that adheres to the moisture-permeable base material and the powder 33 of hydrolysate of cellulose may be found not only outside the layer 1 of the moisture-permeable base material (namely, in the layers 3, 3x, and 3y of the moisture-permeable resin in Figures 1 and 2), but also inside the layer 1 of the moisture-permeable base material. As defined after, in the case where the moisture-permeable base material is a knit fabric or a woven fabric, not only the layers 3, 3x, and 3y of the moisture-permeable resin are found on the surface of the layer 1 of the moisture-permeable base material, but also the moisture-permeable resin can be present at a portion that is adjacent to the surface of and in the layer 1 of the moisture-permeable base material, and in some cases in the entirety of the layer 1 of the moisture-permeable base material, wherein the moisture-permeable resin got through the base material when the layers 3, 3x, and 3y of the moisture-permeable resin were made. These embodiments are also included within the scope of the present invention.

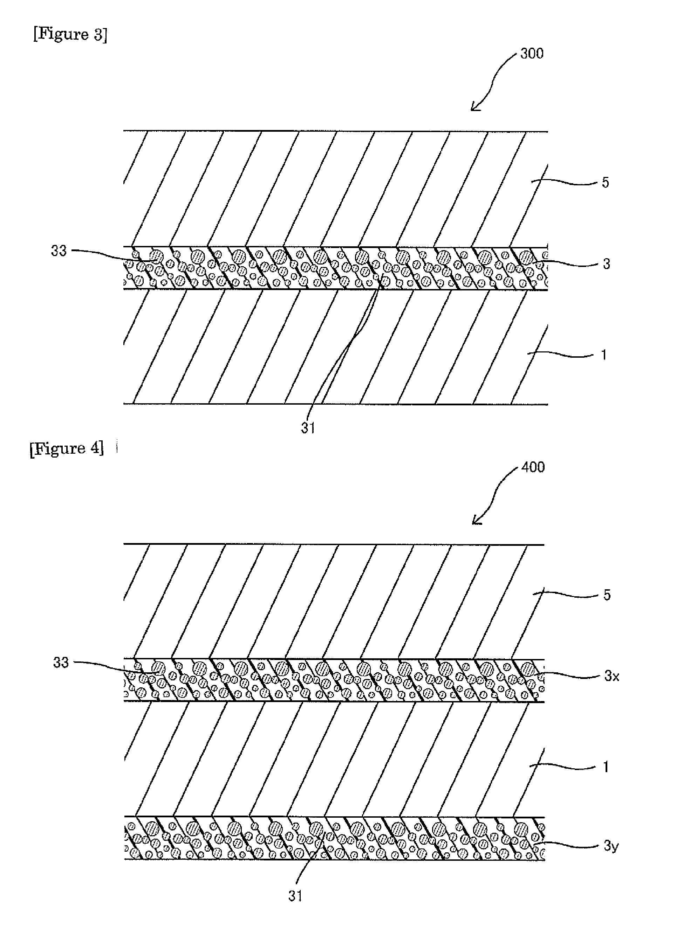

Figure 3 is a schematic, cross-sectional view that shows still another example of the multi-layered sheet of the present invention. The multi-layered sheet 300 of the present invention comprises a layer 1 of a moisture-permeable base material, a layer 3 of a moisture-permeable resin which has been formed on one surface of the layer 1, and a moisture-permeable polymer film (I) 5 which has been formed on the surface of the layer 3 of the moisture-permeable resin. Figure 4 is a schematic, cross-sectional view that shows still another example of the multi-layered sheet of the present invention. The multi-layered sheet 400 of the present invention comprises a layer 1 of a moisture-permeable base material, layers 3x, 3y which have been formed on both surfaces of the layer 1, and a moisture-permeable polymer film (I) 5 which has been formed on the surface of the layer 3x of the moisture-permeable resin. The multi-layered sheet 400 is an example in which although the multi-layered sheet 400 comprises two layers 3x, 3y of the moisture-permeable resin, only a surface of one layer 3x is covered with the moisture-permeable polymer film (I) 5. Multi-layered sheets are also those of the present invention, in which sheets, a knit fabric, a woven fabric, or a moisture-permeable non-woven fabric is set instead of the moisture-permeable polymer film (I) 5 in these examples.

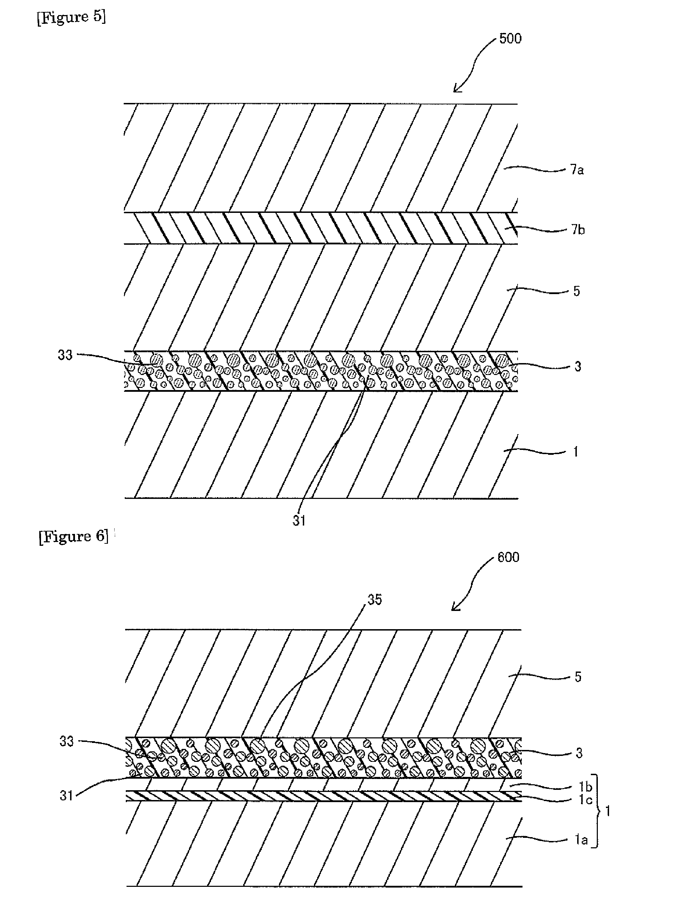

Figure 5 is a schematic, cross-sectional view that shows still another example of the multi-layered sheet of the present invention. The multi-layered sheet 500 of the present invention comprises a layer 1 of a moisture-permeable base material, a layer 3 of a moisture-permeable resin which has been formed on one surface of the layer 1, a moisture-permeable polymer film (I) 5 which is present on the surface of the layer 3 of the moisture-permeable resin, and a knit fabric, a woven fabric, or a moisture-permeable non-woven fabric 7a which is present outside the moisture-permeable polymer film (I) 5 and has been adhered via a layer 7b of a moisture-permeable adhesive. The multi-layered sheet may also comprise other layer of a moisture-permeable resin on the other surface of the layer 1 of the moisture-permeable base material. In that case, the surface of the other layer of the moisture-permeable resin may be covered with a moisture-permeable polymer film (I). Further, outside the moisture-permeable polymer film (I), a knit fabric, a woven fabric, or a moisture-permeable non-woven fabric that has been adhered via a layer of a moisture-permeable adhesive may be present.

Figure 6 is a schematic, cross-sectional view that shows still another example of the multi-layered sheet of the present invention. In the multi-layered sheet 600 of the present invention, a layer 1 of a moisture-permeable base material comprises a knit fabric, a woven fabric, or a moisture-permeable non-woven fabric 1a that has been set outside, a moisture-permeable polymer film (II) 1b that has been set inside, and a layer 1c of a moisture-permeable adhesive that adheres them. On a surface of the moisture-permeable polymer film (II) 1b, a layer 3 of a moisture-permeable resin is formed, which resin comprises a resin 31 that adheres to the moisture-permeable base material, a powder 33 of hydrolysate of cellulose, and an aluminum powder 35. On a surface of the layer 3 of the moisture-permeable resin there is a moisture-permeable polymer film (I) 5. Instead of the moisture-permeable polymer film (I) 5, a knit fabric, a woven fabric, or a moisture-permeable non-woven fabric may be set. Outside the moisture-permeable polymer film (I) 5, a knit fabric, a woven fabric, or a moisture-permeable non-woven fabric that has been adhered via a layer of a moisture-permeable adhesive may be set. Also, on the other surface of the layer 1 of the moisture-permeable base material, namely, on the surface of the knit fabric, the woven fabric, or the moisture-permeable non-woven fabric 1a, there may be another layer of a moisture-permeable resin, and in this case, the surface of another layer of the moisture-permeable resin may be covered with a moisture-permeable polymer film (I). Further, outside the moisture-permeable polymer film (I), there may be a knit fabric, a woven fabric, or a moisture-permeable non-woven fabric that has been adhered via a layer of a moisture-permeable adhesive.

The thermal structure of the present invention may be used as bedclothes such as a blanket, a sheet, a pad to be used on a mattress, a lap robe and a comforter cover, warm clothes such as a poncho, or an emergency supply such as a sheet and a sleeping bag. The multi-layered sheet of the present invention constitutes, as a material for the thermal structure described above, a part of or the whole of the constituent elements of the thermal structure described above.

Next, materials and the like which constitute each layer of the multi-layered sheet according to the present invention will be explained. The term "film" that is used in this description is exchangeable with the term "sheet" that is used in this technical field.

The moisture-permeable base material that constitutes the layer 1 of the moisture-permeable base material is constituted with a material, into which moisture (namely, water vapor) is permeable, specifically a knit fabric, a woven fabric, a moisture-permeable non-woven fabric, a moisture-permeable polymer film (hereafter, it may be called as "a moisture-permeable polymer film (II)"), and the like. The knit fabric and the woven fabric show excellent air-permeability. If the air-permeability is high, it is also excellent in moisture-permeability. Therefore, although the knit fabric and the woven fabric are not defined especially as to be "moisture permeable" one, they are deservingly moisture permeable, and the level that they permeate moisture is high.

The materials for yarn that constitutes the knit fabric and the woven fabric are not particularly restricted. The material may be natural fiber, semi-synthetic fiber, or synthetic fiber. In view of warmth, a raised knit fabric for which microfiber is used is especially preferable. About the moisture permeable non-woven fabric, as long as it is moisture-permeable its type is not specifically restricted. The non-woven fabric may be a spun-bonded one, a thermal bonded one, a melt-blown one, a spun-lace one, or a spun-needle one. Also, the material for fabric that constitutes the non-woven fabric is not particularly restricted. Examples of the material include polyolefin resins such as polyethylene and polypropylene, polyester resins, and polyamide resins.

About the moisture permeable polymer film (II), as long as it is moisture-permeable its material is not specifically restricted. Examples of the polymer that is a main material of the polymer film include polyolefin resins such as polyethylene and polypropylene, polyester resins, polyether resins, polyurethane resins, polyamide resins, poly(vinyl alcohol) resins, and polycarbonate resins. In the polymer film, various additives that are usually used in this technical field, such as plasticizers, heat stabilizers, colorants, flame retardants, ultraviolet absorbers, antistatic agents, and slip additives, may be used. Polymer films comprising as a main component a polymer are usually moisture permeable, except special polymer films.

Because it is excellent in flexibility and can achieve a high moisture permeability, and further can unite both waterproof and moisture-permeable properties, as a polymer that is a material for the polymer film, polyurethane resins are preferable and thermoplastic polyurethane resins are especially preferable. The polyurethane resin may be a polyester polyurethane or a polyether polyurethane. Or, it may comprise as a soft segment a poly(hydroxyethylene) portion. With increasing the ratio of the poly(hydroxyethylene) portion in the polyurethane molecule, the moisture permeability of the polymer film increases. Thus, it is preferable to design a chemical structure of the polyurethane molecule so that an intended moisture permeability can be achieved. In the case where waterproof property is also required, a chemical structure of the polyurethane molecule has to be designed so that such property can be developed.

The layer 1 of a moisture permeable base material may be a monolayer or a multilayer. If it is a multilayer, as is shown in Figure 6, an example of its constitution includes an embodiment comprising a knit fabric, a woven fabric, or a moisture-permeable non-woven fabric 1a, a moisture-permeable polymer film (II) 1b, and a layer 1c of a moisture-permeable adhesive that adheres them. The materials and the like for the knit fabric, the woven fabric, the moisture-permeable non-woven fabric, and the moisture-permeable polymer film (II) are the same as those explained above. The adhesive that constitutes the layer 1c of the moisture-permeable adhesive is not particularly restricted as long as it can adhere the knit fabric, the woven fabric, or the moisture-permeable non-woven fabric to the moisture-permeable polymer film (II) and as long as the layer 1c of the adhesive that will be formed becomes moisture permeable. It may be a solvent type, an emulsion type, a hot-melt type, an ultraviolet or electron radiation curing type, a reaction curing type comprising two liquids, or a self-crosslinking type. The layer of a polymer that is a main component of the adhesive, or the layer of a polymer that has been made by polymerizing a monomer(s) as a main component of the adhesive is usually moisture permeable, except special ones.

The moisture-permeability (JIS K7129 (Method A); Lyssy Method; 40° C; 90%RH) of the moisture-permeable base material is not particularly restricted. However, it is preferably 400 g/m²/24 hours or above, more preferably 700 g/m²/24 hours or above, and still more preferably 800 g/m²/24 hours or above. If the moisture-permeable base material comprises a moisture-permeable non-woven fabric, the upper limit of the moisture-permeability (JIS K7129 (Method A); Lyssy Method; 40° C; 90%RH) of the moisture-permeable base material is preferably 5,000 g/m²/24 hours or below and more preferably 4,000 g/m²/24 hours or below. If the moisture-permeable base material comprises a moisture-permeable polymer film (II), the upper limit of the moisture-permeability (JIS K7129 (Method A); Lyssy Method; 40°C; 90%RH) of the moisture-permeable base material is preferably 2,000 g/m²/24 hours or below and more preferably 1,000 g/m²/24 hours or below.

The thickness of the moisture-permeable base material is, when it is a monolayer, preferably 100 to 400 g/m² and more preferably 130 to 250 g/m² for a knit fabric. About the woven or non-woven fabric, the thickness is preferably 100 to 300 g/m² and more preferably 120 to 200 g/m². About the moisture-permeable polymer film, the thickness is preferably 10 to 100 µm and more preferably 15 to 50 µm. When it is a multilayer, each layer is thinner than that in the case of the monolayer. The thickness of the layer 1c of the moisture-permeable adhesive is, when it has been made by machine-coating, preferably 10 to 50 g/m² and more preferably 15 to 30 g/m².

The layer 3 of the moisture-permeable resin is one that has been made by setting or curing an adhesive or a binder. Thus, it comprises a resin that adheres to a moisture-permeable base material and that is originated from the adhesive or the binder, and a water-insoluble powdery or granular material that generates heat by moisture absorption and that is hydrolysate of a substance derived from a plant or an animal. The adhesive or the binder is not particularly restricted as long as it adheres to the moisture-permeable base material, and also adheres to a moisture-permeable polymer film (I) if there is a layer 5 of the moisture-permeable polymer film (I), and as long as the thus-formed resin layer shows moisture permeability. The layer of the polymer that is a main component of the adhesive or the binder, or the layer of the polymer that has been made by polymerizing a monomer(s) as a main component of the adhesive or the binder is usually moisture permeable, except special ones. The adhesive or the binder may be a solvent type, an emulsion type, a hot-melt type, an ultraviolet or electron radiation curing type, a reaction curing type comprising two liquids, or a self-crosslinking type. If the adhesive or the binder is the a reaction curing type comprising two liquids, usually one liquid is mixed with the water-insoluble powdery or granular material that generates heat by moisture absorption, and then another liquid is mixed.

Here, the term "setting" or "curing" means that in the case where the adhesive is a solvent type or an emulsion type, a polymer that is a solid component of the adhesive sets by evaporating a solvent (including an aqueous one), that in the case where the adhesive is a hot-melt type, a component of the adhesive sets by lowering temperature, that in the case where the adhesive is an ultraviolet or electron radiation curing type, a component (a resin or a monomer as a precursor of a polymer) of the adhesive cures with a reaction by radiating ultraviolet light or electron beam, and that in the case where the adhesive is a reaction curing type comprising two liquids, components contained in the two kinds of liquids, respectively, react each other and cures.

Examples of the resin that adheres to the moisture permeable base material, which constitutes the moisture permeable resin, include resins of an acrylic type, a urethane type, a vinylacetate type, a starch type, an ethylene-vinylacetate copolymer type, and acryl-vinylacetate copolymer type. Among them, acrylic resins are preferable. Adhesives that provide acrylic resins include one (a solvent type, a one-liquid type, or an emulsion type) comprising a polyacrylate as an adhesive component, and another one (an emulsion type, an aqueous solution, or a solvent type) comprising an acrylate monomer as a precursor of the acrylic resin. The acrylate monomer comes to be an acrylic polymer or resin by polymerizing the monomer by the radiation of ultraviolet light or electron beam, by the self-crosslinking (hereinbefore, a one-liquid type), or by the reaction of components to each other (a two-liquids type). It is preferable that the moisture permeable resin has flexibility as a property of the resin that adheres to the moisture permeable base material, which is the main component of the moisture-permeable resin, or based on the property of a plasticizer or the like which is used as an accessory component.

The wording "water-insoluble powdery or granular material that generates heat by moisture absorption which is hydrolysate of a substance derived from a plant and/or hydrolysate of a substance derived from an animal" that constitutes the moisture permeable resin means as follows:
(1) Water-insoluble: Usually, its property is defined as to be insoluble in water, which includes a case where one is not dissolved in water and another case where one is extremely poorly water-soluble.
(2) Generates heat by moisture absorption: One can absorb water vapor and can generate heat as the result of the absorption of water vapor.
(3) Powdery or granular material: In this description the definition of wording "powdery or granular material" includes granules such as granulationes and fine granules, and powdery bodies such as coarse powdery bodies, micropowdery bodies, ultramicro powdery bodies, and those that are usually called as powders. The shape is not particularly restricted. From the economical view, powders are preferable.
(4) A substance derived from a plant: An example of a chemical composition of a main component of a material that satisfies the above items (1) to (3) and that is derived from a plant includes cellulose.
(5) A substance derived from an animal: Examples of chemical compositions of main components of materials that satisfy the above items (1) to (3) and that are derived from animals include scleroproteins such as keratin, fibroin, and collagen.

Meaning of the term "hydrolysate" and specific examples of the "water-insoluble powdery or granular material that generates heat by moisture absorption" will be explained hereafter.

One example of the "water-insoluble powdery or granular material that generates heat by moisture absorption and that is hydrolysate of a substance derived from a plant" is a powder of hydrolysate of cellulose. By contacting a mineral acid to cellulose as a raw material, a part of glucoside bonds are hydrolyzed. After hydrolysis, the degree of polymerization of glucose, therefore an average molecular weight, comes to smaller than that before hydrolysis. Also, by the hydrolysis, the number of a functional group (specifically, an OH group) per weight increases. A water-soluble hydrolysate of cellulose is not the "water-insoluble powdery or granular material that generates heat by moisture absorption and that is hydrolysate of a substance derived from a plant," which constitutes a moisture permeable resin.

Examples of the cellulose as a raw material include celluloses such as wood pulp, non-wood pulp, lint, linter, explosion pulp, deinked pulp, waste paper pulp, cellulose that has been generated by a microorganism, and cotton cellulose, lignocelluloses such as wood powders and a powder of coconut husk, regenerated celluloses such as rayon, cupra, lyocell, and acetylcellulose. In the present invention, it is preferable to use a cellulose powder that has been produced by hydrolyzing pulp cellulose (among pulp celluloses, preferably wood pulp cellulose) as a raw material. A cellulose powder that is derived from cotton and that has been produced by hydrolyzing lint or linter, may also be used. Among cellulose powders that have been produced via a hydrolysis step, those having an apparent specific gravity of 0.08 to 0.36 g/cm³ are preferable and those having an apparent specific gravity of 0.09 to 0.30 g/cm³ are more preferable. The average particle size is preferably 10 to 60 µm, more preferably 30 to 50 µm, and particularly preferably 32 to 45 µm.

In the "water-insoluble powdery or granular material that generates heat by moisture absorption and that is hydrolysate of a substance derived from an animal," the term "animal" includes not only mammals, but also birds. Examples of the material for the "water-insoluble powdery or granular material that generates heat by moisture absorption and that is derived from an animal" include animal hair such as wool, cashmere, and mohair, feathers of waterfowls such as goose and domestic duck, silken thread, and collagen fiber. The main component of the animal hair is keratin protein, and that of the silken thread is fibroin protein. As the animal hair, those that have been subjected to degreasing and active carbon treatment are preferable. This is because animal hair that is covered with a fat and oil such as lanolin is difficultly adhered to the resin that adheres to the moisture permeable base material or is poor in exothermic performance that is developed by absorbing moisture, in some cases.

The powder of hydrolysate of a protein material described above is produced by subjecting animal hair, feather, thread, or fiber to hydrolysis treatment and mechanical treatment (classification and/or pulverization). By hydrolysis, an average molecular weight comes to smaller, and the number of functional groups (specifically, a COOH group and an NH₂ group) per weight increases. A water-soluble hydrolysate of a protein material is not the "water-insoluble powdery or granular material that generates heat by moisture absorption and that is hydrolysate of a substance derived from an animal," which constitutes the moisture-permeable resin. The average particle size of the powder of hydrolysate that is derived from an animal is preferably 10 to 60 µm, and more preferably 20 to 50 µm. The apparent specific gravity is preferably 0.2 to 0.7 g/cm³, and more preferably 0.3 to 0.5 g/cm³.

Granulations and fine granules that have been produced by pulverizing the powder of hydrolysate of cellulose or the powder of hydrolysate of animal hair described above to be a smaller size, and granulating the obtained powder can also be used as a water-insoluble powdery or granular material that generates heat by moisture absorption in the present invention.

The moisture permeable resin may further comprise an aluminum powder. In the case where the moisture permeable resin comprises the water-insoluble powdery or granular material that generates heat by moisture absorption, such as a powder of hydrolysate of cellulose, and the aluminum powder, its heat-retaining performance is elevated by a synergistic effect.

Examples of the aluminum powder include atomized powder (atomized powder), dry-grinded powder (flake powder), and wet-grinded powder (aluminum paste). In the present invention every aluminum powder may be used. From the view point of safety during handling, aluminum paste is preferable. The average particle size of the aluminum powder is preferably 10 to 150 µm, and more preferably 20 to 100 µm.

In the total amount of the moisture-permeable resin, the amount of the resin that adheres to the moisture-permeable base material is 20 to 80 mass %, preferably 25 to 75 mass %, and more preferably 30 to 70 mass %, and the amount of the water-insoluble powdery or granular material that generates heat by moisture absorption, which is hydrolysate of a substance that is derived from a plant and/or an animal, is 80 to 20 mass %, preferably 25 to 75 mass %, and more preferably 30 to 70 mass %. Here, the wording "total amount of the moisture-permeable resin" means the amount of mainly a resin(s) that derived from a solid component of an adhesive when, e.g., a solvent type adhesive is used. The amount of the solvent is not included. When an aluminum powder is also used, its amount is preferably 40 mass% or less, and more preferably 30 mass% or less in the total amount of the moisture-permeable resin. In the case where any solid component, e.g., an aluminum powder, is also used, in which the solid component is one other than a water-insoluble powdery or granular material that generates heat by moisture absorption and is hydrolysate of a substance derived from a plant and/or an animal, the amount of the resin that adheres to the moisture-permeable base material is 20 to 80 mass %, preferably 25 to 75 mass %, and more preferably 30 to 70 mass % in the total amount of the moisture-permeable resin. By using the resin that adheres to the moisture-permeable base material in the amount described above, the solid component is tenaciously bound by the resin that adheres to the moisture-permeable base material, and the moisture-permeable base material is tenaciously adhered to the resin that adheres to the moisture-permeable base material in the moisture-permeable resin. (As defined hereinafter, in the case where there is also a moisture-permeable polymer film (I) or the like on the other surface of the moisture-permeable resin that does not face the moisture-permeable base material, the moisture-permeable polymer film (I) or the like is also tenaciously adhered to the resin that adheres to the moisture-permeable base material.) Also, by using the water-insoluble powdery or granular material that generates heat by moisture absorption and that is hydrolysate of a substance derived from a plant and/or an animal in the amount described above, sufficient exothermic effect by absorbing moisture is developed.

About the water-insoluble powdery or granular material that generates heat by moisture absorption and that is hydrolysate of a substance derived from a plant and/or an animal, which is contained in the moisture-permeable resin, when its amount is shown per 1 m² of the multi-layered sheet according to the present invention, it (if there are two layers of the moisture-permeable resin on two sides, the sum total of those contained in the two layers) is preferably 5 to 100 g, more preferably 5 to 70 g, especially preferably 5 to 50 g, and most preferably 8 to 50 g. In the case where any powder or the like, e.g., an aluminum powder, is also used, in which the powder or the like is one other than a water-insoluble powdery or granular material that generates heat by moisture absorption and that is hydrolysate of a substance derived from a plant and/or an animal, the total amount of the water-insoluble powdery or granular material and the powder or the like that is used in combination is preferably 5 to 100 g/m², more preferably 5 to 70 g/m², especially preferably 5 to 50 g/m², and most preferably 8 to 50 g. The amount of the "water-insoluble powdery or granular material that generates heat by moisture absorption and that is hydrolysate of a substance derived from a plant" is preferably 5 to 30 g/m², more preferably 5 to 25 g/m², and most preferably 8 to 25 g. The amount of the "water-insoluble powdery or granular material that generates heat by moisture absorption and that is hydrolysate of a substance derived from an animal" is preferably 5 to 70 g/m², more preferably 5 to 50 g/m², and most preferably 8 to 50 g. The amount of the aluminum powder is preferably 3 to 30 g/m² and more preferably 5 to 25 g/m².

Although the layer 3 of the moisture-permeable resin is formed on at least one surface of the layer 1 of the moisture-permeable base material in the multi-layered sheet according to the present invention, the moisture-permeable resin may also be found inside the layer 1 of the moisture-permeable base material in addition to one(those) on the surface(s) of the layer 1 of the moisture-permeable base material. For example, in the case where the moisture-permeable base material is a knit fabric or a woven fabric, when a composition that is used to form the layer 3 of the moisture-permeable resin is applied onto the surface(s) of the fabric, a part of the applied composition soaks inside the knit fabric or the woven fabric. Therefore, after the layer 3 of the moisture-permeable resin is made by means of, e.g., drying, there is the moisture-permeable resin also inside and near the surface(s) of the knit fabric or the woven fabric, which resin was derived from the composition that soaked during application. In the case where the layer 3 of the moisture-permeable resin is made by a means in which a knit fabric or a woven fabric is immersed in a composition for the moisture-permeable resin, and then the composition is dried, there is the moisture-permeable resin not only on the surfaces of the knit fabric or the woven fabric but also inside the fabric, which resin was derived from the soaked composition. The embodiments in which the layer 1 of the moisture-permeable base material and the layer(s) 3 of the moisture-permeable resin are under the relation described above are also included within the scope of the multi-layered sheet according to the present invention.

The thickness of the layer 3 of the moisture-permeable resin on the surface of the layer 1 of the moisture-permeable base material is not particularly restricted. However, in the case of a machine-coating, the amount of the application of the composition that is used to form the layer 3 of the moisture-permeable resin is preferably 10 to 60 g/m², more preferably 20 to 50 g/m², and particularly preferably 30 to 40 g/m². In the case of hand-coating, because it is impossible to apply thinly as the case of the machine-coating, the amount of the application is about 100 to 200 g/m².

The moisture-permeable polymer film (I) 5 that covers one surface of the layer 3 of the moisture-permeable resin is not particularly restricted as long as it is a moisture-permeable polymer film. Examples of the polymer that is a main material of the moisture-permeable polymer film (I) include polyolefin resins such as polyethylene and polypropylene, polyester resins, polyether resins, polyurethane resins, polyamide resins, poly(vinyl alcohol) resins, and polycarbonate resins. In the polymer film, various additives that are usually used in this technical field, such as plasticizers, heat stabilizers, colorants, flame retardants, ultraviolet absorbers, antistatic agents, and slip additives, may be used. Polymer films comprising as a main component a polymer are usually moisture permeable, except special polymer films.

As a polymer that is a main material of the moisture-permeable polymer film (I), a polyurethane resin is particularly preferable. This is because it is excellent in flexibility and can realize high moisture permeability, and further can unite both a waterproof property and moisture permeability. The polyurethane resin may be a polyester type polyurethane resin or a polyether type polyurethane resin, or may be one having a poly(hydroxyethylene) portion(s) as its soft segment. Because with more and more a ratio of the poly(hydroxyethylene) portion(s) in a polyurethane molecule, a moisture permeability of a polymer film comes to higher, it is preferable to design a chemical structure of the polyurethane molecule so that a desired moisture permeability is developed. In the case where a waterproof property is also required, the chemical structure of the polyurethane molecule may be designed so that such property is developed.

The moisture-permeability (JIS K7129 (Method A); Lyssy Method; 40° C; 90%RH) of the moisture-permeable polymer film (I) is preferably 400 g/m²/24 hours or above, more preferably 700 g/m²/24 hours or above, and particularly preferably 800 g/m²/24 hours or above. The upper limit is preferably 5,000 g/m²/24 hours or below, and more preferably 2,000 g/m²/24 hours or below. From the view points of the moisture-permeability and the strength, the thickness is preferably 10 to 100 µm and more preferably 15 to 50 µm. As the thickness of the moisture-permeable polymer film (I) comes to thinner, its moisture-permeability comes to higher. However, if it is too thin, there are some cases in which the strength is insufficient.

In the multi-layered sheet according to the present invention, to cover one surface of the layer 3 of the moisture-permeable resin, a knit fabric, a woven fabric, or a moisture-permeable non-woven fabric may be used instead of the above moisture-permeable polymer film (I). About the knit fabric, the woven fabric, or the moisture-permeable non-woven fabric, explanations of them as the moisture-permeable base material are incorporated.

The multi-layered sheet according to the present invention may be one further comprising a knit fabric, a woven fabric, or a moisture-permeable non-woven fabric 7a outside the moisture-permeable polymer film (I) 5 via a layer 7b of a moisture-permeable adhesive. The adhesive that constitutes the layer 7b of the moisture-permeable adhesive is particularly restricted as long as it can adhere to the knit fabric, the woven fabric, or the moisture-permeable non-woven fabric to the moisture-permeable polymer film (I) and the layer of the adhesive that will be formed shows moisture-permeability. A layer of a polymer that is a main component of the adhesive or a layer of a polymer that is made by polymerizing a monomer as a main component of the adhesive is usually moisture permeable, except special ones. The adhesive may be a solvent type, an emulsion type, a hot-melt type, an ultraviolet or electron radiation curing type, a reaction curing type comprising two liquids, or a self-crosslinking type. Although the thickness of the layer 7b of the moisture-permeable adhesive is also particularly restricted, when it is machine-coating, the amount of the adhesive that is applied is preferably 10 to 60 g/m², more preferably 20 to 50 g/m², and particularly preferably 30 to 40 g/m². In the case of hand-coating, because it is impossible to apply thinly as the case of the machine-coating, the amount of the application is about 100 to 200 g/m². About the materials, thicknesses, and the like of the knit fabric, the woven fabric, or the moisture-permeable non-woven fabric, explanations that have been described in the explanations of the moisture-permeable base material are incorporated.

The moisture-permeability (JIS K7129 (Method A); Lyssy Method; 40° C; 90%RH) of the layer 7a of the knit fabric, the woven fabric, or the moisture-permeable non-woven fabric and that of the layer 7b of the moisture-permeable adhesive are also particularly restricted as long as they shows a moisture-permeability. However, as a composite body of the layer 7a of the knit fabric, the woven fabric, or the moisture-permeable non-woven fabric and the layer 7b of the moisture-permeable adhesive, the moisture-permeability is preferably 400 g/m²/24 hours or above, more preferably 700 g/m²/24 hours or above, and particularly preferably 800 g/m²/24 hours or above.

The process for producing the multi-layered sheet according to the present invention is not particularly restricted. However, a process is preferable, which process comprises a step of applying to a moisture-permeable base material a composition comprising a resin that adheres to the moisture-permeable base material or a precursor of the resin and a water-insoluble powdery or granular material that generates heat by moisture absorption, which is hydrolysate of a substance derived from a plant and/or which is hydrolysate of a substance derived from an animal, in an amount of 10 to 200 g/m², and a step of forming a moisture-permeable resin by setting the resin that adheres to the moisture-permeable base material or curing the precursor of the resin. It is more preferable that the step of applying the above composition is performed by machine-coating and that the amount of the application is 10 to 50 g/m².

It is preferable that the multi-layered sheet according to the present invention is specifically produced as follows:
(1) A multi-layered sheet comprising a layer 1 of a moisture-permeable base material and a layer 3 of a moisture-permeable resin

Onto one surface of a moisture-permeable base material, a composition that is used to form a layer 3 of a moisture-permeable resin (e.g., one comprising a water-insoluble powdery or granular material that generates heat by moisture absorption such as a powder of hydrolysate of cellulose, or another one comprising a powder of hydrolysate of cellulose or the like and an aluminum powder) is applied in an appropriate thickness. To form the layer 3 of the moisture-permeable resin, drying, polymerization of a monomer, or the like is performed. In the case where the layer 3 of the moisture-permeable resin is formed on both surfaces of the layer 1 of the moisture-permeable base material, after the composition that is used to form the layer 3 of the moisture-permeable resin and that is applied onto one surface of the layer 1 of the moisture-permeable base material has dried (or after the monomer has polymerized), the composition is also applied in an appropriate thickness onto the other surface and then drying, polymerization of a monomer, or the like is performed. Alternatively, the moisture-permeable base material is immersed in a composition that is used to form the layer 3 of the moisture-permeable resin, is drawn from the composition, and is dried.

(2) A multi-layered sheet comprising a moisture-permeable polymer film (I) on one surface of a layer 3 of a moisture-permeable resin (in the case where a layer 1 of the moisture-permeable base material is a monolayer)

Onto one surface of a knit fabric, a woven fabric, a moisture-permeable non-woven fabric, or a moisture-permeable polymer film, a composition that is used to form a layer 3 of a moisture-permeable resin (e.g., one comprising a water-insoluble powdery or granular material that generates heat by moisture absorption such as a powder of hydrolysate of cellulose, or another one comprising a powder of hydrolysate of cellulose or the like and an aluminum powder) is applied in an appropriate thickness. Then, the surface of the applied composition is covered with a moisture-permeable polymer film (I). At need, from outside of the moisture-permeable polymer film (I), an ultraviolet light or an electron beam is radiated to polymerize a monomer that is contained in the composition to form the layer 3 of the moisture-permeable resin.

(3) A multi-layered sheet comprising a moisture-permeable polymer film (I) on one surface of a layer 3 of a moisture-permeable resin (in the case where a layer 1 of a moisture-permeable base material is a multilayer)

Onto one surface of a knit fabric, a woven fabric, or a moisture-permeable non-woven fabric, an adhesive that is used to form a layer 1c of a moisture-permeable adhesive is applied in an appropriate thickness. Then, the surface of the applied adhesive is covered with a moisture-permeable polymer film (II). At need, from outside of the moisture-permeable polymer film (II), an ultraviolet light or an electron beam is radiated to polymerize a monomer that is contained in the adhesive. Thus, a moisture-permeable base material is produced.

Onto the surface of the moisture-permeable polymer film (II) in the moisture-permeable base material, a composition that is used to form a layer 3 of a moisture-permeable resin (e.g., one comprising a water-insoluble powdery or granular material that generates heat by moisture absorption such as a powder of hydrolysate of cellulose, or another one comprising a powder of hydrolysate of cellulose or the like and an aluminum powder) is applied in an appropriate thickness. Then, the surface of the applied composition is covered with a moisture-permeable polymer film (I). At need, from outside of the moisture-permeable polymer film (I), an ultraviolet light or an electron beam is radiated to polymerize a monomer that is contained in the composition to form the layer 3 of the moisture-permeable resin.

A composition to form the layer 3 of the moisture-permeable resin may be applied onto one surface of the moisture-permeable polymer film (I), and the surface of the applied composition may be covered with the moisture-permeable base material. In this case, the moisture-permeable polymer film (II) in the moisture-permeable base material faces the applied composition.

(4) In the case where there is further a knit fabric, a woven fabric, or a moisture-permeable non-woven fabric 7a outside a moisture-permeable polymer film (I) via a layer 7b of a moisture-permeable adhesive

According to the process described in the above items (2) and (3), a composite body of a moisture-permeable base material, a moisture-permeable resin, and a moisture-permeable polymer film (I) is produced. Onto the surface of the moisture-permeable polymer film (I) in this composite body, an adhesive for a layer 7b of a moisture-permeable adhesive is applied. Then, the surface of the applied adhesive is covered with a knit fabric, a woven fabric, or a moisture-permeable non-woven fabric 7a. It may be possible that onto one surface of the knit fabric, the woven fabric, or the moisture-permeable non-woven fabric 7a, the adhesive for the layer 7b of the moisture-permeable adhesive is applied, and then the surface of the applied adhesive is covered with the composite body described above.

(5) A multi-layered sheet in which there are layers 3,3 of a moisture-permeable resin on both surfaces of a layer 1 of a moisture-permeable base material, and surfaces of both layers 3,3 of the moisture-permeable resin are covered with a knit fabric, a woven fabric, or a moisture-permeable non-woven fabric

Onto one surface of a layer 1 of a moisture-permeable base material, a composition that is used to form a layer 3 of a moisture-permeable resin is applied in an appropriate thickness. Then, the surface of the applied composition is covered with a knit fabric, a woven fabric, or a moisture-permeable non-woven fabric. To form the layer 3 of the moisture-permeable resin, drying, polymerization of a monomer, or the like is performed. Onto the other surface of the layer 1 of the moisture-permeable base material, the composition that is used to form the layer 3 of the moisture-permeable resin is applied in an appropriate thickness. Then, the surface of the applied composition is covered with the knit fabric, the woven fabric, or the moisture-permeable non-woven fabric. To form the layer 3 of the moisture-permeable resin, drying, polymerization of a monomer, or the like is performed.

The thermal structure of the present invention comprises, as the whole of or as a part of it, the multi-layered sheet of the present invention. For example, a blanket, a sheet, a lap robe, a poncho, and an emergency supply that are thermal structures of the present invention may be comprised of the multi-layered sheet of the present invention in its entirety. In the case where the thermal structure of the present invention is a pad to be used on a mattress, the multi-layered sheet of the present invention can be used as the outer material and/or the lining. In the case where the thermal structure of the present invention is a comforter cover or a sleeping bag, the entirety of it may be constituted by the multi-layered sheet of the present invention or a part of it (for example, when its form is a bag, a half of it (only one side)) may be constituted by the multi-layered sheet of the present invention.

### Examples

The present invention will be specifically explained below. However, the present invention does not limited to these examples only.

### [Example 1] Determination of moisture permeability of thermoplastic polyurethane film

The moisture permeability of each of three thermoplastic polyurethane films that have different thicknesses was determined by Lyssy method (JIS K7129 (Method A) under the following conditions.

### (1) Measuring instruments

Vapor Permeation Tester L80-4000, manufactured by Lyssy Corporation.

### (2) Conditions for determination

40°C, 90%RH

### (3) Results

Table 1 shows the results.

**[Table 1]**

| Sample | Moisture-permeability |
|---|---|
| Thermoplastic polyurethane film having a thickness of 12 µm | 923 g/m²/24 hours |
| Thermoplastic polyurethane film having a thickness of 15 µm | 887 g/m²/24 hours |
| Thermoplastic polyurethane film having a thickness of 20 µm | 458 g/m²/24 hours |

### [Example 2] Determination of temperature change by heat that is generated from powder of hydrolysate of cellulose by moisture absorption

The heat (temperature change) by moisture absorption of each of two kinds of hydrolyzed cellulose powders was determined with time.

### (1) Materials that were used

(a) W-100GK, manufactured by Nippon Paper Chemical Industries Co., Ltd.: A powder of hydrolysate of cellulose, specific gravity = 0.3-0.4 g/cm³, apparent specific gravity = 0.20-0.30 g/cm³, average particle size = about 37 µm
(b) W-50GK, manufactured by Nippon Paper Chemical Industries Co., Ltd.: A powder of hydrolysate of cellulose, apparent specific gravity = 0.15-0.20 g/cm³, average particle size = about 45 µm
(c) Blank: A polyester · cotton blended fabric (polyester 65%, cotton 45%, 45×45/110×76), 40 cm×40 cm

### (2) Measuring instrument and conditions for determination

Thermo-hygrostat: HUMIDIC CHAMBER IG-42M, manufactured by Yamato Scientific Co., Ltd.
Thermometer: µR1800 automatic temperature recorder, manufactured by Yokogawa Meters & Instruments Corporation
Conditions for determination: 23°C, 90%RH

### (3) Measuring method

(i) A powder of hydrolysate of cellulose, 9 g, is measured out, is put into a petri dish having a diameter of 100 mm, and is evened up.
(ii-1) A thermometer is fixed so that the measuring site (the sensor) of the thermometer is buried in the powder of hydrolysate of cellulose.
(ii-2) The fabric as a blank is alternately folded so that the length of one side comes to be 1/4, thus obtaining a structure having a size of 10 cm× 10 cm and having 16 layers. The thermometer is tucked into the midst site in thickness (namely, between the lower surface of the 8th layer from the top and the upper surface of the 8th layer from the bottom) of the structure.
(iii) The petri dishes and the fabric are put into a thermo-hygrostat, of which conditions have been set at 23°C and 90%RH, and the temperature of each sample is determined with time.

### (4) Results

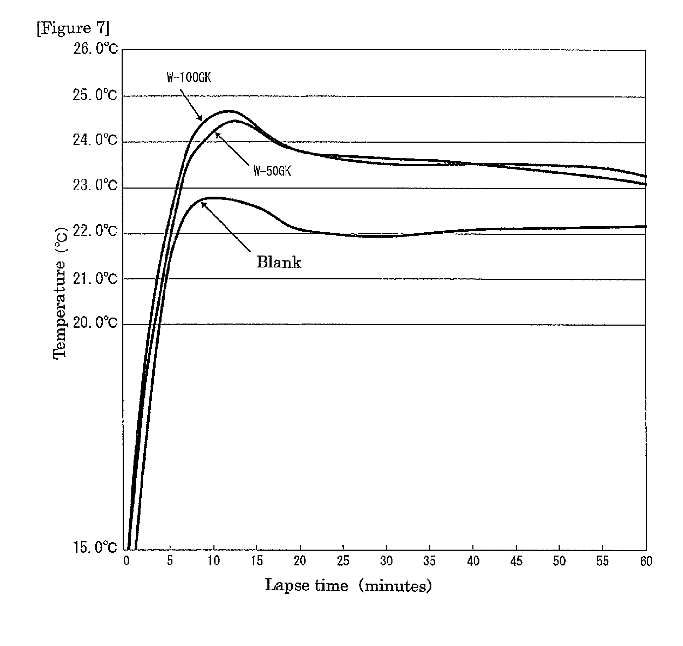

Table 2 and Figure 7 show the results. As is clear from Table 2 and Figure 7, as compared with Blank (only a polyester · cotton blended fabric), the temperatures of the powders of hydrolysate of cellulose increased by heat generated by moisture absorption, and their temperatures were higher than that of Blank even one hour after the start of the examination.

**[Table 2]**

| (Unit: °C) | | | | | | | | | | | | | | | |
|---|---|---|---|---|---|---|---|---|---|---|---|---|---|---|---|
| | Lapse time (minutes) | | | | | | | | | | | | | | |
| Sample | 0 | 2 | 4 | 6 | 8 | 10 | 12 | 14 | 16 | 18 | 20 | 30 | 40 | 50 | 60 |
| W-100GK | 11.9 | 17.7 | 20.9 | 23.0 | 24.1 | 24.5 | 24.6 | 24.4 | 24.2 | 23.9 | 23.8 | 23.6 | 23.6 | 23.4 | 23.1 |
| W-50GK | 12.1 | 17.4 | 20.3 | 22.5 | 23.7 | 24.1 | 24.4 | 24.3 | 24.1 | 23.9 | 23.7 | 23.5 | 23.5 | 23.5 | 23.3 |
| Blank | 10.4 | 15.6 | 20.1 | 21.9 | 22.6 | 22.6 | 22.6 | 22.6 | 22.5 | 22.3 | 22.0 | 21.9 | 22.1 | 22.2 | 22.3 |

### [Example 3] Determination of temperature change by heat that is generated from multi-layered sheet by moisture absorption (No. 1)

Multi-layered sheets were made, in which their moisture-permeable base materials were a thermoplastic polyurethane film and a polyester · cotton blended fabric, respectively, the moisture-permeable resin was an acrylic resin comprising a powder of hydrolysate of cellulose, and the moisture-permeable polymer film (I) was a thermoplastic polyurethane film, and their temperatures were determined with time.

### (1) Materials that were used

### (a) Moisture-permeable base materials

Sample 1: The thermoplastic polyurethane film having a thickness of 15 µm that was used in Example 1
Sample 2: A polyester · cotton blended fabric (polyester 65%, cotton 45%, 45×45/110×76)

### Blank: same as Sample 2

### (b) Composition that was used to form layer of moisture-permeable resin

One that was prepared by mixing W-100GK of Nippon Paper Chemical Industries Co., Ltd. that was a powder of hydrolysate of cellulose with Acrylic binder XE-3773 (containing toluene (a solvent), solid component concentration = 16-18%) of Tohpe Corporation that was an acrylic resin adhesive

### (c) Moisture-permeable polymer film (I)

The thermoplastic polyurethane film having a thickness of 15 µm that was used in Example 1

### (2) Processes for preparing multi-layered sheets (Samples 1 and 2)

(i) A powder of hydrolysate of cellulose, 15 g, is measured out. Toluene, 30 g, is added to the powder, and the obtained mixture is left until the toluene soaks into the powder.
(ii) An acrylic resin adhesive, 100 g, is measured out. The powder of hydrolysate of cellulose comprising toluene that was prepared in step (i) is added to the adhesive. The obtained mixture is fully mixed to prepare a composition that will be used to form a layer of a moisture-permeable resin. The moisture-permeable resin that will be formed from this composition comprises 52 to 55 mass % of a resin that adheres to a moisture-permeable base material and 48 to 45 mass % of the powder of hydrolysate of cellulose.
(iii) The composition that was prepared in step (ii) is applied onto one surface of a moisture-permeable base material in an amount of 200 g/m².
(iv) The surface of the composition thus applied is covered with a thermoplastic polyurethane film.
(v) The composite body that was prepared in step (iv) is dried at 40°C for 12 hours. From the composite body, a sample having a size of 30 cm × 24 cm is clipped. The clipped one will be used as a sample for determination.

In the thus-prepared multi-layered sheets (namely, those after drying) (Samples 1 and 2), the amount of the powder of hydrolysate of cellulose was about 20.6 g/m².

### (3) Measuring instruments and conditions for determination

Thermo-hygrostat: HUMIDIC CHAMBER IG-42M, manufactured by Yamato Scientific Co., Ltd.
Thermometer: µR1800 automatic temperature recorder, manufactured by Yokogawa Meters & Instruments Corporation
Conditions for determination: 23°C, 90%RH

### (4) Measuring method

Each of Samples 1 and 2 and Blank (only the polyester · cotton blended fabric) was alternately folded so that the length of one side comes to be 1/4, thus obtaining a structure having a size of 7.5 cm×6 cm and having 16 layers. A thermometer is tucked into the midst site in thickness (namely, between the lower surface of the 8th layer from the top and the upper surface of the 8th layer from the bottom) of the structure. The structures are put into the thermo-hygrostat, of which conditions have been set at 23°C and 90%RH, and the temperature of each structure is determined with time.

### (5) Results

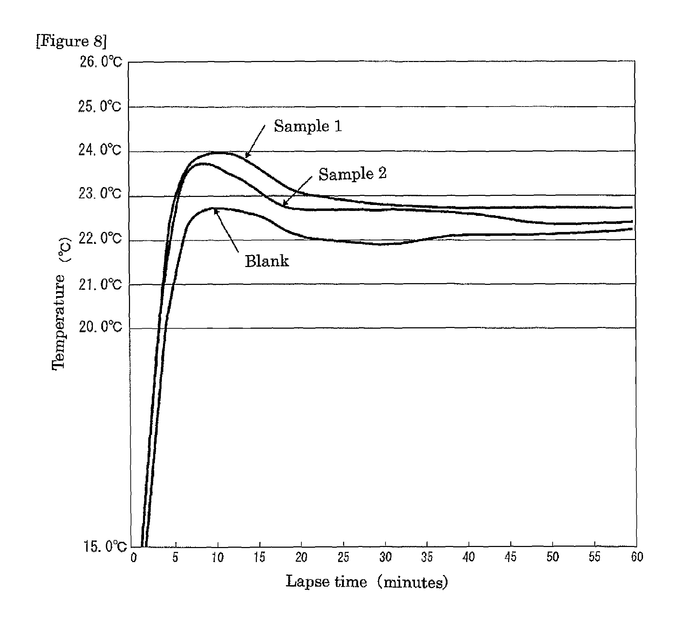

Table 3 and Figure 8 show the results. As is clear from Table 3 and Figure 8, as compared with Blank (only a polyester · cotton blended fabric), temperatures of Samples 1 and 2 that were multi-layered sheets according to the present invention increased by heat generated by moisture absorption, and their temperatures were maintained to be higher than that of Blank even one hour after the start of the examination.

**[Table 3]**

| (Unit: °C) | | | | | | | | | | | | | | | |
|---|---|---|---|---|---|---|---|---|---|---|---|---|---|---|---|
| | Lapse time (minutes) | | | | | | | | | | | | | | |
| Sample | 0 | 2 | 4 | 6 | 8 | 10 | 12 | 14 | 16 | 18 | 20 | 30 | 40 | 50 | 60 |
| Sample 1 | 11.6 | 17.2 | 21.3 | 23.2 | 23.9 | 24.0 | 24.0 | 23.8 | 23.6 | 23.3 | 23.1 | 22.8 | 22.7 | 22.7 | 22.7 |
| Sample 2 | 11.5 | 17.2 | 21.8 | 23.3 | 23.7 | 23.7 | 23.5 | 23.3 | 23.0 | 22.8 | 22.7 | 22.7 | 22.6 | 22.4 | 22.4 |
| Blank | 10.4 | 15.6 | 19.9 | 21.9 | 22.6 | 22.7 | 22.7 | 22.6 | 22.5 | 22.3 | 22.1 | 21.9 | 22.1 | 22.1 | 22.2 |

### [Example 4] Determination of temperature change by heat that is generated from multi-layered sheet by moisture absorption (No. 2)

Multi-layered sheets were made, in which the moisture-permeable base material was a polyester · cotton blended fabric, the moisture-permeable resins were those obtained by mixing a powder of hydrolysate of cellulose and an aluminum powder with an acrylic resin as disclosed below, and the moisture-permeable polymer film (I) was a thermoplastic polyurethane film, and their temperatures were determined with time.

### (1) Materials that were used

### (a) Moisture-permeable base materials

A polyester · cotton blended fabric (polyester 65%, cotton 45%, 45× 45/110 × 76)

### (b) Composition that was used to form layer of moisture-permeable resin

A basic agent was Acrylic binder XE-3773 (containing toluene (a solvent), solid component concentration = 16-18%) of Tohpe Corporation that was an acrylic resin adhesive. Only the basic agent (Blank), one that was obtained by mixing with the basic agent W-100GK of Nippon Paper Chemical Industries Co., Ltd. that was a powder of hydrolysate of cellulose (Composition for Sample a), another one that was obtained by mixing with the basic agent Alumi-paste A2 of Hayashi Chemical Industry Co., Ltd. that was an aluminum paste (Composition for Sample b), and the other one that was obtained by mixing with the basic agent a powder of hydrolysate of cellulose and an aluminum paste (Composition for Sample c) were used. The aluminum paste comprises aluminum in an amount of 75 mass %, and the rest was mainly composed of fatty acids (20 mass %) and a solvent (5 mass %). The aluminum powder has an average particle size of about 80 µm.

### (c) Moisture-permeable polymer film

The thermoplastic polyurethane film having a thickness of 15 µm that was used in Example 1

### (2) Preparations of compositions that were used to form layers of moisture-permeable resins

### (a) One that was obtained by mixing a powder of hydrolysate of cellulose (Composition for Sample a)

A powder of hydrolysate of cellulose, 15 g, is measured out. Toluene, 30 g, is added to the powder, and the obtained mixture is left until the toluene soaks into the powder. An acrylic resin adhesive, 100 g, is measured out. The powder of hydrolysate of cellulose comprising toluene is added to the adhesive. The obtained mixture is fully mixed to prepare a composition. The moisture-permeable resin that will be formed from this composition comprises 52 to 55 mass % of a resin that adheres to a moisture-permeable base material and 48 to 45 mass % of the powder of hydrolysate of cellulose.

### (b) One that was obtained by mixing aluminum powder (Composition for Sample b)

An acrylic resin adhesive, 100 g, is measured out. An aluminum paste, 15 g, is added to the adhesive. The obtained mixture is fully mixed to prepare a composition. The moisture-permeable resin that will be formed from this composition comprises 53 to 56 mass % of a resin that adheres to a moisture-permeable base material, 37 to 34 mass % of the aluminum powder, and fatty acids as the rest.

### (c) One that was obtained by mixing both powder of hydrolysate of cellulose and aluminum powder (Composition for Sample c)

A powder of hydrolysate of cellulose, 15 g, is measured out. Toluene, 30 g, is added to the powder, and the obtained mixture is left until the toluene soaks into the powder. An acrylic resin adhesive, 100 g, is measured out. The powder of hydrolysate of cellulose comprising toluene and an aluminum paste, 15 g, are added to the adhesive. The obtained mixture is fully mixed to prepare a composition. The moisture-permeable resin that will be formed from this composition comprises 35 to 38 mass % of a resin that adheres to a moisture-permeable base material, 33 to 32 mass % of the powder of hydrolysate of cellulose, 25 to 24 mass % of the aluminum powder, and fatty acids as the rest.

### (3) Process for preparing multi-layered sheet

(i) The composition to form a layer of a moisture-permeable resin is applied onto one surface of a polyester · cotton blended fabric in an amount of 200 g/m².
(ii) The surface of the composition thus applied is covered with a thermoplastic polyurethane film.
(iii) The composite body that was prepared in step (ii) is dried at 40° C for 12 hours. From the composite body a sample having a size of 30 cm × 24 cm is clipped. The clipped one will be used as a sample for determination.

In the-thus prepared multi-layered sheets (namely, those after drying) (Samples a, b, and c), the amounts of the powder of hydrolysate of cellulose and the aluminum powder were as follows.
(Sample a) A powder of hydrolysate of cellulose about 20.2 g/m²
(Sample b) An aluminum powder about 19.5 g/m²
(Sample c) A powder of hydrolysate of cellulose (about 18.7 g/m²) + An aluminum powder (about 18.7 g/m²)

### (3) Measuring instruments and conditions for determination

Thermo-hygrostat: HUMIDIC CHAMBER IG-42M, manufactured by Yamato Scientific Co., Ltd.
Thermometer: µR1800 automatic temperature recorder, manufactured by Yokogawa Meters & Instruments Corporation
Conditions for determination: 23°C, 90%RH

### (4) Measuring method

Each of Samples was alternately folded so that the length of one side comes to be 1/4, thus obtaining a structure having a size of 7.5 cm×6 cm and having 16 layers. A thermometer is tucked into the midst site in thickness (namely, between the lower surface of the 8th layer from the top and the upper surface of the 8th layer from the bottom) of the structure. The structures are put into the thermo-hygrostat, of which conditions have been set at 23°C and 90%RH, and the temperature of each structure is determined with time.

### (6) Results

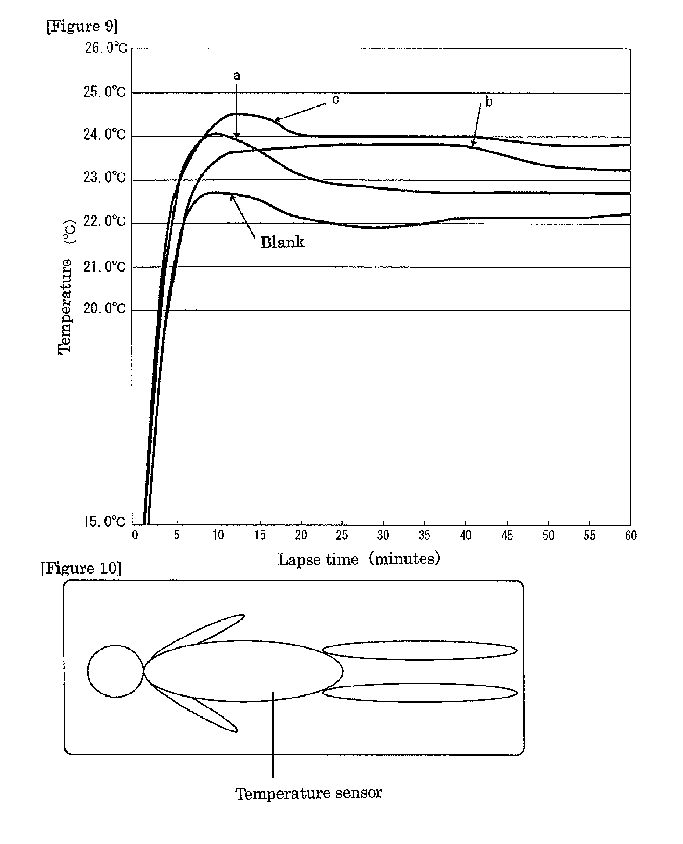

Table 4 and Figure 9 show the results. As is clear from Table 4 and Figure 9, as compared with Blank (as a composition to form a layer of a moisture-permeable resin, only an acrylic resin adhesive was used), the temperatures of Samples a and c that were multi-layered sheets according to the present invention increased by heat generated by moisture absorption, and their temperatures were maintained to be higher than that of Blank even one hour after the start of the examination. As compared with Sample b in which an aluminum powder having heat-retaining performance by reflection heat was used, Sample a arrived at the maximum temperature for a time shorter than that of Sample b. Thus, in this point of view, it was confirmed that the use of the powder of hydrolysate of cellulose was advantageous. Sample c showed temperatures higher than those of Samples a and b.

**[Table 4]**

| (Unit: °C) | | | | | | | | | | | | | | | |
|---|---|---|---|---|---|---|---|---|---|---|---|---|---|---|---|
| | Lapse time (minutes) | | | | | | | | | | | | | | |
| Sample | 0 | 2 | 4 | 6 | 8 | 10 | 12 | 14 | 16 | 18 | 20 | 30 | 40 | 50 | 60 |
| Sample a | 11.6 | 17.2 | 22.0 | 23.0 | 23.8 | 24.0 | 24.0 | 23.9 | 23.7 | 23.4 | 23.2 | 22.8 | 22.7 | 22.7 | 22.7 |
| Sample b | 11.4 | 15.9 | 20.5 | 22.0 | 23.0 | 23.4 | 23.5 | 23.7 | 23.7 | 23.7 | 23.8 | 23.8 | 23.7 | 23.4 | 23.2 |
| Sample c | 11.6 | 17.1 | 21.5 | 23.0 | 23.7 | 24.2 | 24.4 | 24.5 | 24.4 | 24.3 | 24.1 | 24.0 | 24.0 | 23.8 | 23.8 |
| Blank | 10.8 | 15.7 | 20.5 | 22.0 | 22.5 | 22.7 | 22.7 | 22.6 | 22.5 | 22.3 | 22.1 | 21.9 | 22.1 | 22.1 | 22.3 |

### [Example 5] Determination of washing resistance

A multi-layered sheet was prepared, in which the moisture-permeable base material was made of a polyester · cotton blended fabric and a thermoplastic polyurethane film, the moisture-permeable resin was an acrylic resin comprising a powder of hydrolysate of cellulose, and the moisture-permeable polymer film was a moisture-permeable polyurethane film. The multi-layered sheet was subjected to the examination of washing resistance.

### (1) Materials for multi-layered sheet

### (a) Moisture-permeable base material

One obtained by adhering a polyester · cotton blended fabric (polyester 65%, cotton 45%, 45×45/110×76) and the thermoplastic polyurethane film having a thickness of 12 µm that was used in Example 1 with Acrylic binder XE-3773 (containing toluene (a solvent), solid component concentration = 16-18%) of Tohpe Corporation that was an acrylic resin adhesive.

### (b) Composition that was used to form layer of moisture-permeable resin

One that was prepared by mixing W-100GK of Nippon Paper Chemical Industries Co., Ltd. that was a powder of hydrolysate of cellulose with Acrylic binder XE-3773 (containing toluene (a solvent), solid component concentration = 16-18%) of Tohpe Corporation that was an acrylic resin adhesive

### (c) Moisture-permeable polymer film

The thermoplastic polyurethane film having a thickness of 15 µm that was used in Example 1

### (2) Process for preparing multi-layered sheet

(i) An acrylic resin adhesive is applied onto one surface of a polyester · cotton blended fabric in an amount of 100 g/m². The surface of the adhesive thus applied is covered with a thermoplastic polyurethane film having a thickness of 12 µm.
(ii) A powder of hydrolysate of cellulose, 15 g, is measured out. Toluene, 30 g, is added to the powder, and the obtained mixture is left until the toluene soaks into the powder.
(iii) An acrylic resin adhesive, 100 g, is measured out. The powder of hydrolysate of cellulose comprising toluene that was prepared in step (ii) is added to the adhesive. The obtained mixture is fully mixed to prepare a composition that will be used to form a layer of a moisture-permeable resin.
(iv) The composition that was prepared in step (iii) is applied onto the surface of the moisture-permeable polyurethane film in the moisture-permeable base material that was prepared in step (i) in an amount of 100 g/m².
(v) The surface of the composition thus applied is covered with a thermoplastic polyurethane film having a thickness of 15 µm.
(vi) The composite body that was prepared in step (v) is dried at 40°C for 12 hours. The dried composite body will be used as a sample for determination.

In the thus-prepared multi-layered sheet (namely, one after drying), the amount of the powder of hydrolysate of cellulose was about 10.3 g/m².

### (3) Examination method

The multi-layered sheet was subjected to a washing-resistance examination by the method of JIS 0217 103 in Kaken test center of general incorporated foundation. Table 5 shows the conditions for the examination.

**[Table 5]**

| | Water flow | Liquor ratio | Washing | | Rinsing (1st) | | Rinsing (2nd) | | |
|---|---|---|---|---|---|---|---|---|---|
| Detergent | | | Temp. | Time | Temp. | Time | Temp. | Time | Drying |
| Laundry synthetic detergent or neutral detergent (ADEKA; manufactured by Kao) | Strong | 1:30 | 40°C | 5 mins. | 30°C or below | 2 mins. | 30 ° C or below | 2 mins. | By hanging |

### (4) Results

Table 6 shows the results. As is clear from Table 6, in the multi-layered sheet of the present invention there was no detachment or the like even after 30 times of washing. Namely, it became clear that the multi-layered sheet according to the present invention was good in washing resistance

**[Table 6]**

| Times of washing | Appearance | Condition of needlework | Color fastness | Change of dimension (width) | Change of dimension (length) |
|---|---|---|---|---|---|
| 10 times | Good | Good | 5 (4-5) | 1.2 % | - 0.7 % |
| 20 times | Good | Good | 5 (4-5) | 1.5 % | - 0.7 % |
| 30 times | Good | Good | 5 (4-5) | 1.5 % | - 1.0 % |

### [Example 6] Determination of temperature during use of bedclothes that were made of thermal structure (No.1)

A sheet and a comforter cover that were the thermal structures according to the present invention were prepared, and the temperatures were determined with time while sleeping by using them.

### 1. Bedclothes that were used in examination of temperature determination

### (1) Sheet of the present invention

### (1-1) Materials

### (a) Moisture-permeable base material

A mouton-like knit fabric that was made of polyester microfiber, weight per square (Metsuke) = 200 g/m²

### (b) Composition that was used to form layer of moisture-permeable resin

One obtained by mixing 20 mass % of W-100GK of Nippon Paper Chemical Industries Co., Ltd. that was a powder of hydrolysate of cellulose and 15 mass % of Alumi-paste A2 of Hayashi Chemical Industry Co., Ltd. that was an aluminum paste with 65 mass % of Acrylic binder XE-3773 (containing toluene (a solvent), solid component concentration = 16-18%) of Tohpe Corporation that was an acrylic resin adhesive. The aluminum content of the aluminum paste is 75 mass % and the rest is mainly composed of fatty acids (20 mass %) and a solvent (5 mass %). The average particle size of the aluminum powder is about 80 µm. The moisture-permeable resin that will be formed from this composition comprises 23.5 to 25.5 mass % of a resin that adheres to a moisture-permeable base material, 44.8 to 43.5 mass % of the powder of hydrolysate of cellulose, 25.2 to 24.5 mass % of the aluminum powder, and fatty acids as the rest.

### (c) Moisture-permeable polymer film

The thermoplastic polyurethane film having a thickness of 15 µm that was used in Example 1

### (1-2) Production method

(i) A composition that is used to form a layer of a moisture-permeable resin is applied onto one surface of a mouton-like knit fabric in an amount of 20 g/m².
(ii) The surface of the composition thus applied is covered with a thermoplastic polyurethane film.
(iii) The composite body that was prepared in step (ii) is dried at 40° C for 12 hours.

In the thus-prepared sheet, the amount of the powder of hydrolysate of cellulose was about 9.8 g/m² and the amount of the aluminum powder was about 7.3 g/m².

### (1-3) Method for using

A surface of a Futon mattress is covered with the sheet of the present invention so that the side of the mouton-like knit fabric faces a human body.

### (2) Comforter cover of the present invention

### (2-1) Production method

The sheet of the present invention and a fleece knit fabric made of a polyester microfiber (weight per square (Metsuke) = 150 g/m²) are seamed together. The sheet of the present invention is set so that the side of the mouton-like knit fabric is outside (namely, so that the polyurethane film is inside the comforter cover and faces a comforter).

### (2-2) Method for using

A comforter is put into the comforter cover. The comforter with the comforter cover is put on the sheet so that the side of the fleece knit fabric faces air (namely, so that the side of the mouton-like knit fabric faces a human body).

### (3) Blank

A sheet and a comforter cover made of a polyester · cotton blended fabric (polyester 65%, cotton 45%, 45×45/110×76)

### (4) Futon used

### (4-1) Futon mattress (Shiki-futon)

Futon cloth: made of a polyester · cotton blended fabric (polyester 65%, cotton 45%, 45×45/110×76)
Wadding: polyester (100%), 3 kg

### (4-2) Comforter (Kake-futon)

Futon cloth: made of cotton (100%) (40×40/230)
Wadding: down (90%) + small feather (10%), 1.2 kg

### 2. Determination

### (1) Conditions during using bedclothes

An examinee slept by using bedclothes under conditions shown in Table 7. The temperature was determined with time during sleeping.

**[Table 7]**

| | | | Blank | Examination 1 | Examination 2 |
|---|---|---|---|---|---|
| Conditions of bedclothes | Under Examinee | | Futon mattress | Futon mattress | Futon mattress |
| | | | Sheet made of polyester · cotton blended fabric | Sheet of present invention | Sheet of present invention |
| | On Examinee | | Comforter | Comforter | Comforter |
| | | | Comforter cover made of polyester · cotton blended fabric | Comforter cover made of polyester · cotton blended fabric | Comforter cover of present invention |
| Examinee (42 years old; male) | Body Temperature | Before exam. | 36.1° | 36.1° | 35.9° |
| | | After exam. | 35.7° | 35.9° | 36.3° |
| | Weight | Before exam. | 56.6kg | 56.8 kg | 56.0 kg |
| | | After exam. | 56.0 kg | 56.6 kg | 56.0 kg |

### (2) Measuring equipment

Environmental simulator manufactured by Kusumoto Chemicals, Ltd.

Thermometry LR8500 manufactured by HIOK

### (3) Established conditions during determination

10 ° C, 50%RH. The actual measured values were as follows: temperature: 9.9-10.4°C; humidity: 47.1-50.7%RH

### (4) Measuring method

An examinee lies on a sheet and then is overlaid with a comforter. He maintains a uniform position. A sensor (a stick portion having a diameter of 2 mm) of a thermometry is put under his right hip. Thus, the temperature is determined between the human body and the bedclothes (refer to Figure 10).

### (5) Results

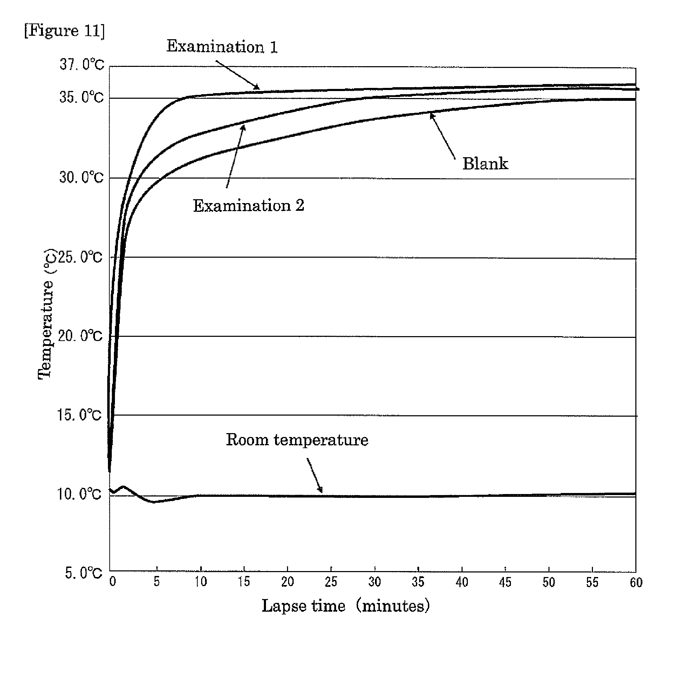

Table 8 and Figure 11 show the results. As is clear from Table 8 and Figure 11, when bedclothes made of the thermal structures according to the present invention were used, the temperature between a human body and the bedclothes came higher as compared to Blank. When both the sheet and the comforter cover that were made of the thermal structures according to the present invention were used (examination 2), the temperature came higher as compared to the case where only the sheet that was made of the thermal structure of the present invention was used (examination 1).

**[Table 8]**

| (Unit: °C) | | | | | | | | | | | | |
|---|---|---|---|---|---|---|---|---|---|---|---|---|
| | Lapse Time (minutes) | | | | | | | | | | | |
| Examination | 0 | 1 | 3 | 5 | 10 | 20 | 30 | 40 | 50 | 60 | 90 | 120 |
| Blank | 11.4 | 14.9 | 25.3 | 27.9 | 29.7 | 31.3 | 32.0 | 32.8 | 33.2 | 33.8 | 34.6 | 35.0 |
| Examination 1 | 11.7 | 21.4 | 27.1 | 29.4 | 31.3 | 32.7 | 33.6 | 34.1 | 34.6 | 35.0 | 35.6 | 35.7 |
| Examination 2 | 11.7 | 22.5 | 29.1 | 31.0 | 33.7 | 35.0 | 35.3 | 35.4 | 35.6 | 35.7 | 36.0 | 36.0 |
| Room temp. | 10.3 | 10.1 | 10.4 | 10.1 | 9.5 | 9.9 | 9.9 | 9.9 | 9.9 | 9.9 | 10.0 | 10.2 |

### [Example 7] Determination of temperature change by heat that is generated from multi-layered sheet by moisture absorption (No. 3)

Multi-layered sheets were made, in which the moisture-permeable base material was a polyester · cotton blended fabric, and the moisture-permeable resin was an acrylic resin comprising a powder of hydrolysate of cellulose, and their temperature changes based on heat by moisture absorption were determined.

### (1) Materials that were used

### (a) Moisture-permeable base material

For both Sample and Blank, a polyester · cotton blended fabric (polyester 65%, cotton 45%, 45×45/110×76) was used.

### (b) Composition that was used to form layer of moisture-permeable resin

One that was prepared by mixing W-100GK of Nippon Paper Chemical Industries Co., Ltd. that was a powder of hydrolysate of cellulose with Acrylic binder XE-3773 (containing toluene (a solvent), solid component concentration = 16-18%) of Tohpe Corporation that was an acrylic resin adhesive

### (2) Process for preparing multi-layered sheet of present invention

(i) A powder of hydrolysate of cellulose, 60 g, is measured out. Toluene, 60 g, is added to the powder, and the obtained mixture is left until the toluene soaks into the powder.
(ii) An acrylic resin adhesive, 240 g, is measured out. The powder of hydrolysate of cellulose comprising toluene that was prepared in step (i) is added to the adhesive. The obtained mixture is fully mixed to prepare a composition that will be used to form a layer of a moisture-permeable resin. The moisture-permeable resin that will be formed from this composition comprises 42 to 39 mass % of a resin that adheres to a moisture-permeable base material and 58 to 61 mass % of the powder of hydrolysate of cellulose.
(iii) The composition that was prepared in step (ii) is applied onto one surface of a moisture-permeable base material in an amount of 200 g/m².
(iv) The composite body thus obtained is naturally dried for a day and a night, and then dried at 40° C for 2 hours.

In the thus-prepared multi-layered sheet (namely, one after drying), the amount of the powder of hydrolysate of cellulose was about 33.3 g/m².

### (3) Determination method

Method B (improved method) for determination of heat by moisture absorption of Kaken test center of general incorporated foundation
Please see http://www.kaken.or.jp/research/2002/theme2002-08.html (3-1) Conditions for determination
Measuring time: 30 minutes
Temperature in the examination room: 20 ± 2°C
Humidity: 40%RH at start and 90%RH during humidifying (during determination)
Side that is used for determination: One surface of sample (the side of the moisture-permeable resin)
Washing treatment: None

### (3-2) Brief summary of measuring method

(i) Dry air is supplied into a reaction container in which a sample for determination has been put until the humidity in the container becomes 40%RH.
(ii) Two hours after the humidity became constant (40%RH), supply of saturated water vapor starts.
(iii) From the start of the supply of the saturated water vapor, the temperature of the surface (the side of the moisture-permeable resin) of the sample is determined with time.

### (4) Results

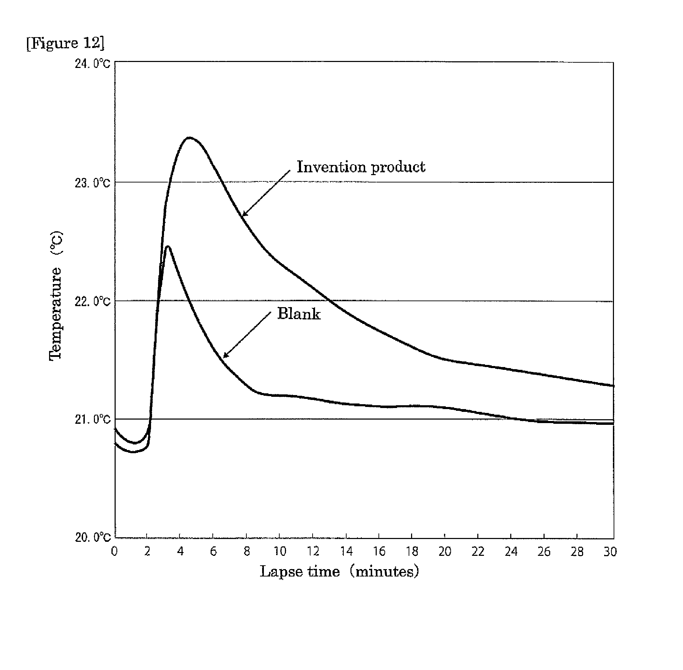

Tables 9 and 10 and Figure 12 show the results. As is clear from these data, the multi-layered sheet of the present invention showed an increased temperature of 1.0°C higher than that of Blank because the powder of hydrolysate of cellulose showed an exothermic action by moisture absorption.

**[Table 9]**

| (Unit: °C) | | | | | | | | | | | | | | | |
|---|---|---|---|---|---|---|---|---|---|---|---|---|---|---|---|
| | Lapse time (minutes) | | | | | | | | | | | | | | |
| Examination | 0 | 1 | 2 | 3 | 4 | 5 | 6 | 7 | 8 | 9 | 10 | 15 | 20 | 25 | 30 |
| Invention product | 20.8 | 20.7 | 20.8 | 22.8 | 23.3 | 23.3 | 23.1 | 22.8 | 22.6 | 22.4 | 22.3 | 21.8 | 21.5 | 21.4 | 21.3 |
| Blank | 20.9 | 20.8 | 20.9 | 22.4 | 22.1 | 21.8 | 21.6 | 21.4 | 21.3 | 21.2 | 21.2 | 21.1 | 21.1 | 21.0 | 21.0 |

**[Table 10]**

| | Initial temp. | Max. temp. | Increased temp. | Difference from Blank |
|---|---|---|---|---|
| Invention product | 20.7°C | 23.4°C | 2.7°C | 1.0°C |
| Blank | 20.8°C | 22.5°C | 1.7°C | - |

### [Example 8] Determination of heat by moisture absorption and evaluation of washing resistance

Multi-layered sheets were made, in which the moisture-permeable base material was a non-woven fabric made of a polyester, the moisture-permeable resin was an acrylic resin comprising a powder of hydrolysate of cellulose, and the moisture-permeable polymer film was a thermoplastic polyurethane film, and their temperature changes based on heat by moisture absorption were determined.

### (1) Materials that were used

### (a) Moisture-permeable base materials

For Samples and Blank, a spun needle non-woven fabric made of a polyester (thickness = 80 g/m², moisture permeability = 3,280 g/m²/24hours (JIS K7129 (method A); Lyssy method; 40°C; 90%RH)) was used.

### (b) Composition that was used to form layer of moisture-permeable resin

One that was prepared by mixing W-100GK of Nippon Paper Chemical Industries Co., Ltd. that was a powder of hydrolysate of cellulose with Acrylic binder XE-3773 (containing toluene (a solvent), solid component concentration = 16-18%) of Tohpe Corporation that was an acrylic resin adhesive

### (c) Moisture-permeable polymer film

The thermoplastic polyurethane film having a thickness of 15 µm, that was used in Example 1

### (2) Processes for preparing multi-layered sheets (Samples I, II, and III)

(i) Sample I: A powder of hydrolysate of cellulose, 3 g, is measured out. Toluene, 6 g, is added to the powder, and the obtained mixture is left until the toluene soaks into the powder.
Sample II: A powder of hydrolysate of cellulose, 5 g, is measured out. Toluene, 10 g, is added to the powder, and the obtained mixture is left until the toluene soaks into the powder.
Sample III: A powder of hydrolysate of cellulose, 8 g, is measured out. Toluene, 16 g, is added to the powder, and the obtained mixture is left until the toluene soaks into the powder.
Sample IV: A powder of hydrolysate of cellulose, 35 g, is measured out. Toluene, 70 g, is added to the powder, and the obtained mixture is left until the toluene soaks into the powder.
Sample V: A powder of hydrolysate of cellulose, 45 g, is measured out. Toluene, 90 g, is added to the powder, and the obtained mixture is left until the toluene soaks into the powder.
Sample VI: A powder of hydrolysate of cellulose, 75 g, is measured out. Toluene, 150 g, is added to the powder, and the obtained mixture is left until the toluene soaks into the powder.

(ii) An acrylic resin adhesive, 100 g, is measured out. Any powder of hydrolysate of cellulose comprising toluene that was prepared in step (i) is added to the adhesive. The obtained mixture is fully mixed to prepare a composition that will be used to form a layer of a moisture-permeable resin. The moisture-permeable resins that will be formed from the compositions comprise a resin that adheres to a moisture-permeable base material and the powder of hydrolysate of cellulose in the following percentages.
Sample I: resin = 85.7 to 84.2 mass %; powder of hydrolysate of cellulose = 14.3 to 15.8 mass %
Sample II: resin = 78.3 to 76.2 mass %; powder of hydrolysate of cellulose = 21.7 to 23.8 mass %
Sample III: resin = 69.2 to 66.7 mass %; powder of hydrolysate of cellulose = 30.8 to 33.3 mass %
Sample IV: resin = 34.0 to 31.4 mass %; powder of hydrolysate of cellulose = 66.0 to 68.6 mass %
Sample V: resin = 28.6 to 26.3 mass %; powder of hydrolysate of cellulose = 71.4 to 73.7 mass %
Sample VI: resin = 19.4 to 17.6 mass %; powder of hydrolysate of cellulose = 80.6 to 82.4 mass %

(iii) Any composition that was prepared in step (ii) is applied onto one surface of a moisture-permeable base material in an amount of 100 g/m².
(iv) The surface of the composition thus applied is covered with a moisture permeable polymer film.
(v) The composite body that was prepared in step (iv) is dried at 40°C for 12 hours.

### (3) Determination of heat by moisture absorption

From each of Samples I to V, a sample having a size of 30 cm × 24 cm was clipped. By using the clipped sample, the determination was performed in the same conditions and method as those in Example 3.

### (4) Evaluation of washing resistance

From each of Samples I to V, a sample having a size of 20 cm × 20 cm was clipped. In a household washing machine having a compact size, these samples were washed by using a liquid detergent (washing = 5 minutes; spin drying = 1 minute; rinsing = 5 minutes; spin drying = 1 minute; rinsing = 5 minutes; spin drying = 1 minute), and were hung out to dry in a room (25 °C). Washing and drying were repeated 30 times.

### (5) Results

Table 11 shows the results. As is clear from Table 11, when the amount of the powder of hydrolysate of cellulose is low (Sample I), the maximum temperature arrived by heat is low and the time required to arrive at the maximum temperature is long. Meanwhile, when the amount of the powder of hydrolysate of cellulose is so much (Sample VI), the washing resistance is poor.

**[Table 11]**

| | Initial temp. | Max. temp. | Increased temp. | Difference from blank | Time required to arrive at max. temp. | Washing resistance |
|---|---|---|---|---|---|---|
| Sample I | 11.0°C | 23.1°C | 12.1°C | 0.3°C | 14 mins. | Not detached |
| Sample II | 11.2°C | 23.7°C | 12.5°C | 0.7°C | 12 mins. | Not detached |
| Sample III | 10.9°C | 23.7°C | 12.8°C | 1.0°C | 12 mins. | Not detached |
| Sample IV | 11.3°C | 24.8°C | 13.5°C | 1.7°C | 10 mins. | Not detached |
| Sample V | 11.0°C | 25.0°C | 14.0°C | 2.2°C | 8 mins. | Not detached |
| Sample VI | 11.2°C | 25.3°C | 14.1°C | 2.3°C | 7 mins. | Detached |
| Blank | 10.8°C | 22.6°C | 11.8°C | - | 12 mins. | - |

### [Example 9] Determination of temperature change by heat that is generated from multi-layered sheet by moisture absorption (No. 4)

A multi-layered sheet was made, in which the moisture-permeable base material was a polyester · cotton blended fabric, the moisture-permeable resin was an acrylic resin comprising a powder of hydrolysate of cellulose, and the moisture permeable polymer film (I) was a thermoplastic polyurethane film, and the temperature was determined with time.

### (1) Materials that were used in Sample

### (a) Moisture-permeable base material

A polyester · cotton blended fabric (polyester 65%, cotton 45%, 45× 45/110×76)

### (b) Composition that was used to form layer of moisture-permeable resin

One that was prepared by mixing W-100GK of Nippon Paper Chemical Industries Co., Ltd. that was a powder of hydrolysate of cellulose with Vanstar X1417B10 (continuous phase: water; solid component concentration = 45 to 50 %) of Chubu Saiden Co., Ltd. that was an acrylic resin adhesive of an aqueous emulsion type.

### (c) Moisture permeable polymer film

The thermoplastic polyurethane film having a thickness of 15 µm that was used in Example 1

### (2) Blank

A polyester · cotton blended fabric (polyester 65%, cotton 45%, 45× 45/110×76), 30 cm × 24 cm

### (3) Process for preparing multi-layered sheet (Sample)

(i) A powder of hydrolysate of cellulose, 20 g, is measured out. Water, 40 g, is added to the powder, and the obtained mixture is left until the water soaks into the powder.
(ii) An acrylic resin adhesive of an aqueous emulsion type, 80 g, is measured out. The powder of hydrolysate of cellulose comprising water that was prepared in step (i) is added to the adhesive. The obtained mixture is fully mixed to prepare a composition that will be used to form a layer of a moisture-permeable resin. The moisture-permeable resin that will be formed from this composition comprises 64.3 to 66.7 mass % of a resin that adheres to the moisture-permeable base material and 35.7 to 33.3 mass % of the powder of hydrolysate of cellulose.
(iii) The composition that was prepared in step (ii) is applied onto one surface of a polyester · cotton blended fabric in an amount of 100 g/m².
(iv) The surface of the composition thus applied is covered with a thermoplastic polyurethane film
(v) The composite body that was prepared in step (iv) is dried at 40°C for 12 hours. From it, a sample having a size of 30 cm × 24 cm is clipped to obtain one for determination.

In the thus-prepared multi-layered sheet (namely, one after drying), the amount of the powder of hydrolysate of cellulose was about 14.3 g/m².

### (4) Measuring instruments and conditions for determination

Thermo-hygrostat: HUMIDIC CHAMBER IG-42M, manufactured by Yamato Scientific Co., Ltd.
Thermometer: µR1800 automatic temperature recorder, manufactured by Yokogawa Meters & Instruments Corporation
Conditions for determination: 23°C, 90%RH

### (5) Measuring method

Each of Sample and Blank was alternately folded so that the length of one side comes to be 1/4, thus obtaining a structure having a size of 7.5 cm× 6 cm and having 16 layers. A thermometer is tucked into the midst site in thickness (namely, between the lower surface of the 8th layer from the top and the upper surface of the 8th layer from the bottom) of the structure having 16 layers. The structures are put into the thermo-hygrostat, of which conditions have been set at 23°C and 90%RH, and the temperature of each structure is determined with time.

### (6) Results

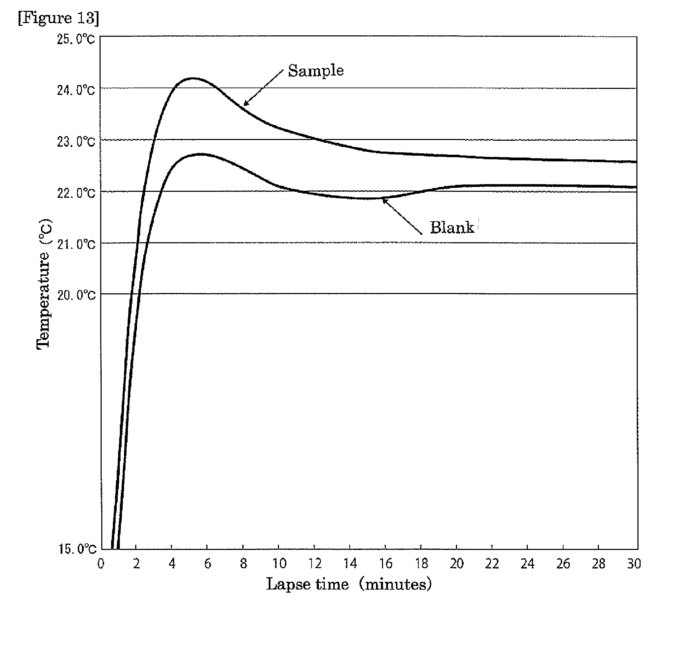

Table 12 and Figure 13 show the results. As is clear from Table 12 and Figure 13, as compared with Blank (only a polyester · cotton blended fabric), the temperature of Sample that was a multi-layered sheet according to the present invention increased by heat generated by moisture absorption, about 10 minutes after the start of the examination, arrived at a maxim temperature that was 1.5°C higher than that of Blank, and even 1 hour after the start of the examination, was maintained to be higher than that of Blank.

**[Table 12]**

| (Unit: °C) | | | | | | | | | | | | | | | |
|---|---|---|---|---|---|---|---|---|---|---|---|---|---|---|---|
| | Lapse time (minutes) | | | | | | | | | | | | | | |
| Examination | 0 | 2 | 4 | 6 | 8 | 10 | 12 | 14 | 16 | 18 | 20 | 30 | 40 | 50 | 60 |
| Invention Sample | 11.6 | 17.2 | 21.3 | 23.2 | 24.0 | 24.2 | 24.1 | 23.8 | 23.6 | 23.4 | 23.2 | 22.8 | 22.7 | 22.6 | 22.6 |
| Blank | 10.4 | 15.6 | 19.9 | 21.8 | 22.5 | 22.7 | 22.7 | 22.6 | 22.5 | 22.3 | 22.1 | 21.9 | 22.1 | 22.1 | 22.1 |

### [Example 10] Determination of temperature change by heat that is generated from powder of hydrolysate of wool or powder of hydrolysate of cellulose by moisture absorption

The heat (temperature change) by moisture absorption of each of the powder of hydrolysate of wool and the powder of hydrolysate of cellulose was determined with time.

### (1) Materials that were used

(a) A powder that was obtained by grinding wool (one after degreasing and active carbon treatment and hydrolysis treatment) manufactured by Izumi-Senko Co., Ltd., apparent specific gravity = 0.44 g/cm³, average particle size = about 40 µm
(b) W-100GK, manufactured by Nippon Paper Chemical Industries Co., Ltd.: A powder of hydrolysate of cellulose, specific gravity = 0.3-0.4 g/cm³, apparent specific gravity = 0.20-0.30 g/cm³, average particle size = about 37 µm

### (2) Measuring instruments and conditions for determination

Thermo-hygrostat: HUMIDIC CHAMBER IG-42M, manufactured by Yamato Scientific Co., Ltd.
Thermometer: µR1800 automatic temperature recorder, manufactured by Yokogawa Meters & Instruments Corporation
Conditions for determination: 30°C, 90%RH

### (3) Measuring method

(i) A powder, 150 g, is measured out, is put into a petri dish having a diameter of 100 mm, and is evened up.
(ii) A thermometer is fixed so that the measuring site (the sensor) of the thermometer is buried in the powder.
(iii) The petri dish is put into a thermo-hygrostat, of which conditions have been set at 30°C and 90%RH, and the temperature is determined with time.

### (4) Results

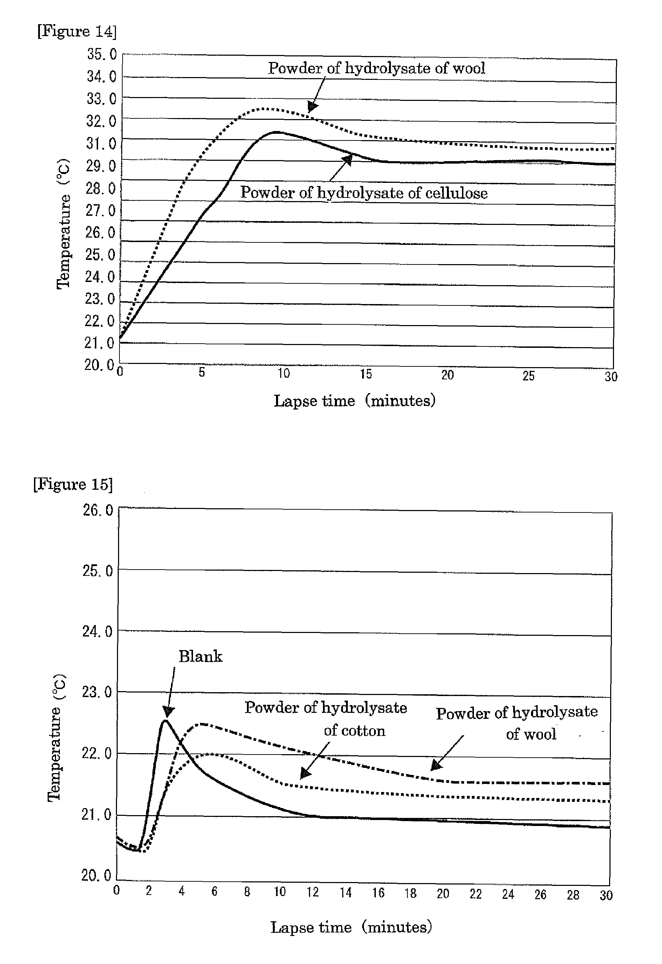

Table 13 and Figure 14 show the results. As is clear from Table 13 and Figure 14, as compared with the powder of hydrolysate of cellulose, the powder of hydrolysate of wool showed more excellent exothermic property by absorbing moisture.

**[Table 13]**

| (Unit: °C) | | | | | | | | | | | | |
|---|---|---|---|---|---|---|---|---|---|---|---|---|
| | Lapse time (minutes) | | | | | | | | | | | |
| Kind of powder | 0 | 2 | 4 | 6 | 8 | 10 | 12 | 15 | 17 | 20 | 25 | 30 |
| Powder of hydrolysate of wool | 21.0 | 25.6 | 29.1 | 31.4 | 32.3 | 32.4 | 31.8 | 31.2 | 31.0 | 30.8 | 30.8 | 30.8 |
| Powder of hydrolysate of cellulose | 21.1 | 23.6 | 26.3 | 28.4 | 30.7 | 31.3 | 31.0 | 30.3 | 30.0 | 30.0 | 30.2 | 30.2 |

### [Example 11] Determination of temperature change by heat that is generated from multi-layered sheet by moisture absorption (No. 5)

Multi-layered sheets were made, in which the moisture-permeable base material was a polyester · cotton blended fabric, and the moisture-permeable resins were an acrylic resin comprising a powder of hydrolysate of cotton and an acrylic resin comprising a powder of hydrolysate of wool, respectively, and their temperature changes by moisture absorption were determined.

### (1) Materials that were used

### (a) Moisture-permeable base materials

For Samples and Blank, a polyester · cotton blended fabric (polyester 65%, cotton 45%, 45×45/110×76) was used.

### (b) Compositions that were used to form layers of moisture-permeable resins

### (b-1) Composition comprising powder of hydrolysate of cotton

One that was prepared by mixing a cotton powder (average particle diameter: about 40 µm) that had been subjected to hydrolysis treatment, manufactured by Izumi-Senko Co., Ltd., with Acrylic binder XE-3773 (containing toluene (a solvent), solid component concentration = 16-18%) of Tohpe Corporation that was an acrylic resin adhesive

### (b-2) Composition comprising powder of hydrolysate of wool

One that was prepared by mixing the powder that had been obtained by grinding wool of Izumi-Senko Co., Ltd. and that had been used in Example 10 (namely, a wool powder after degreasing and active carbon treatment and hydrolysis treatment) with Acrylic binder XE-3773 (containing toluene (a solvent), solid component concentration = 16-18%) of Tohpe Corporation that was an acrylic resin adhesive

### (2) Processes for preparing multi-layered sheets according to present invention

(i) A powder of hydrolysate of cotton or a powder of hydrolysate of wool, 60 g, is measured out. Toluene, 60 g, is added to the powder, and the obtained mixture is left until the toluene soaks into the powder.
(ii) An acrylic resin adhesive, 240 g, is measured out. The powder of hydrolysate of cotton comprising toluene or the powder of hydrolysate of wool comprising toluene that was prepared in step (i) is added to the adhesive. The obtained mixture is fully mixed to prepare a composition that will be used to form a layer of a moisture-permeable resin. The moisture-permeable resin that will be formed from this composition comprises 42 to 39 mass % of a resin that adheres to a moisture-permeable base material and 58 to 61 mass % of the powder of hydrolysate of cotton or the powder of hydrolysate of wool.
(iii) The composition that was prepared in step (ii) is applied onto one surface of a moisture-permeable base material in an amount of 200 g/m².
(iv) The composite body thus obtained is naturally dried for a day and a night, and then dried at 40° C for 2 hours.

In the thus-prepared multi-layered sheet (namely, one after drying), the amount of the powder of hydrolysate of cotton or the powder of hydrolysate of wool was about 33.3 g/m².

### (3) Determination method

Method B (improved method) for determination of heat by moisture absorption of Kaken test center of general incorporated foundation
Please see http://www.kaken.or.jp/research/2002/theme2002-08.html

### (3-1) Conditions for determination

Measuring time: 30 minutes
Temperature in the examination room: 20±2°C
Humidity: 40%RH at start and 90%RH during humidifying (during determination)
Side that is used for determination: One surface of sample (the side of the moisture-permeable resin)
Washing treatment: None

### (3-2) Brief summary of measuring method

(i) Dry air is supplied into a reaction container in which a sample for determination has been put to be the humidity of 40%RH in the container.
(ii) Two hours after the humidity became constant (40%RH), supply of saturated water vapor starts.
(iii) From the start of the supply of the saturated water vapor, the temperature of the surface (the side of the moisture-permeable resin) of the sample is determined with time.

### (4) Results

Tables 14 and 15 and Figure 15 show the results. The temperature of Blank arrived at maxim in a short while (about 3 minutes) after the start of the examination, and then rapidly decreased. The multi-layered sheet of the present invention comprising the powder of hydrolysate of cotton took a small amount of time (about 5 minutes) to arrive at maxim temperature, and the maxim temperature was a little lower than that of Blank. However, after arriving at the maxim temperature, the sheet was maintained at a temperature that was about 0.5 °C higher than that of Blank. The multi-layered sheet of the present invention comprising the powder of hydrolysate of wool took a small amount of time (about 5 minutes) to arrive at the maxim temperature, and the maxim temperature was about the same as that of Blank. However, in this sheet exotherm continued until the examination was terminated (for 30 minutes). Namely, it is expected by using the multi-layered sheet of the present invention that exotherm is maintained for a long time of period.

Although the grounds for the differences in exothermic behaviors based on the difference of the kinds of powders are not clear, it is thought that it is based on the difference between the chemical compositions of the components of the powders, and additionally that the affinity of the powder and the resin that adheres to the moisture-permeable base material is responsible. Namely, in the case where the affinity of the powder and the resin is excellent, it is required a certain time of period for arriving moisture to the powder. Therefore, it is required a certain of time to arrive at maxim temperature. However, after the moisture arrives to the powder, it is thought that a constant exothermic behavior is maintained. Meanwhile, in the case where the affinity of the powder and the resin is poor, the temperature increases in a short time of period because the moisture rapidly arrives to the powder. However, because warmed moisture passes through and moves away from the resin, it is thought that only the difference between the exotherm and the removal of the warmed moisture contributes the increase of the temperature.

**[Table 14]**

| (Unit: °C) | | | | | | | | | | | | | | | |
|---|---|---|---|---|---|---|---|---|---|---|---|---|---|---|---|
| | Lapse time (minutes) | | | | | | | | | | | | | | |
| Examination | 0 | 1 | 2 | 3 | 4 | 5 | 6 | 7 | 8 | 9 | 10 | 15 | 20 | 25 | 30 |
| Invention product (Powder of hydrolysate of cotton) | 20.7 | 20.7 | 20.8 | 21.5 | 21.8 | 22.0 | 21.9 | 21.9 | 21.9 | 21.8 | 21.7 | 21.5 | 21.4 | 21.4 | 21.4 |
| Invention product (Powder of hydrolysate of wool) | 20.6 | 20.6 | 20.5 | 21.5 | 22.2 | 22.5 | 22.5 | 22.4 | 22.3 | 22.3 | 22.2 | 22.0 | 21.8 | 21.7 | 21.7 |
| Blank | 20.8 | 20.8 | 20.8 | 22.5 | 22.2 | 21.9 | 21.6 | 21.4 | 21.3 | 21.3 | 21.2 | 21.0 | 21.0 | 21.0 | 20.9 |

**[Table 15]**

| | Initial temp. | Max. temp. | Increased temp | Difference from Blank |
|---|---|---|---|---|
| Invention product (Powder of hydrolysate of cotton) | 20.7°C | 22.0°C | 1.3°C | - 0.4°C |
| Invention product (Powder of hydrolysate of wool) | 20.6°C | 22.5°C | 1.9°C | 0.2°C |
| Blank | 20.8°C | 22.5°C | 1.7°C | - |

### [Example 12] Determination of temperature during use of bedclothes that were made of thermal structures (No.2)

Bedclothes that were the thermal structures of the present invention were prepared, and the temperature was determined with time while sleeping by using them.

### 1. Bedclothes that were the thermal structures and that were used in examination of temperature determination

### (1) Materials

### (1-1) Moisture-permeable base material

The thermoplastic polyurethane film having a thickness of 15 µm that was used in Example 1

### (1-2) Compositions that were used to form layers of moisture-permeable resins

### (1-2-1) Composition a

Per 1 m² of the area of the portion where a composition will be applied, an acrylic binder (containing toluene (a solvent), solid component concentration = 15%) of Tohpe Corporation that is an acrylic resin adhesive, 53 g, the powder of hydrolysate of wool (same as that used in Example 10), 2.28 g, and a powder of hydrolysate of cellulose (W-100GK of Nippon Paper Chemical Industries Co., Ltd.), 1.14 g are prepared. By mixing them composition a is prepared. The moisture-permeable resin that will be formed from this composition a comprises 69.9 mass % of a resin that adheres to a moisture-permeable base material, 20.1 mass % of the powder of hydrolysate of wool, and 10.0 mass % of the powder of hydrolysate of cellulose.

### (1-2-2) Composition b

Per 1 m² of the area of the portion where a composition will be applied, an acrylic binder (containing toluene (a solvent), solid component concentration = 15%) of Tohpe Corporation that is an acrylic resin adhesive, 53 g, the powder of hydrolysate of wool (same as that used in Example 10), 1.14 g, a powder of hydrolysate of cellulose (W-100GK of Nippon Paper Chemical Industries Co., Ltd.), 1.14 g, and an aluminum paste (Alumi-paste A2 of Hayashi Chemical Industry Co., Ltd.) are prepared. By mixing them composition b is prepared. The aluminum paste comprises aluminum in an amount of 75 mass %, and the rest is composed of mainly fatty acids (20 mass %) and a solvent (5 mass %). The aluminum powder has an average particle size of about 80 µm. The moisture-permeable resin that will be formed from this composition b comprises 70.3 mass % of a resin that adheres to a moisture-permeable base material, 10.1 mass % of the powder of hydrolysate of wool, 10.1 mass % of the powder of hydrolysate of cellulose, 7.6 mass % of the aluminum powder, and fatty acids as the rest.

### (1-3) Material that will be arranged outside moisture permeable resin that has been formed by using composition a

A mouton-like, raised knit fabric made of polyester microfiber

### (1-4) Material that will be arranged outside moisture permeable resin that has been formed by using composition b

A silky, raised knit fabric made of polyester microfiber

### (2) Preparation method

(i) Composition a is applied onto one surface of a thermoplastic polyurethane film, and then the surface of composition a thus applied is covered with a mouton-like knit fabric.
(ii) The composite body that was prepared in step (i) is dried at 40°C for 12 hours.
(iii) Composition b is applied onto another surface of the thermoplastic polyurethane film, and then the surface of composition b thus applied is covered with a silky knit fabric.

In the thus-prepared bedclothes, the amount of the powder of hydrolysate of wool was 3.42 g/m², the amount of the powder of hydrolysate of cellulose was 2.28 g/m², and the amount of the aluminum powder was 0.855 g/m².

### 2. Determination

### (1) Conditions of bedclothes used

On a futon mattress, the bedclothes that had been prepared as described in paragraph 1. was put so that the side of the mouton-like raised knit fabric was top face. On the bedclothes an examinee (42 years old; male; 56 kg) lay. On the examinee the bedclothes that had been prepared as described in paragraph 1. was overlaid so that the side of the mouton-like, raised knit fabric faced a human body. On the bedclothes a comforter was overlaid.

The examination of Blank was also performed by the same examinee. On a futon mattress, instead of the bedclothes that had been prepared as described in paragraph 1., a sheet made of a polyester · cotton blended fabric (polyester 65%, cotton 45%, 45×45/110×76) was put. On the sheet the examinee lay. On the examinee, a comforter that had been covered with a comforter cover made of a polyester · cotton blended fabric (polyester 65%, cotton 45%, 45×45/110×76) was overlaid.

### (2) Measuring equipments

Environmental simulator manufactured by Kusumoto Chemicals, Ltd.

Thermometry LR8500 manufactured by HIOK

### (3) Established conditions during determination

9°C, 50%RH. The actual measured value of the temperature was 9.9-10.2°C.

### (4) Measuring method

The examinee maintains a uniform position during the examination. A sensor (a stick portion having a diameter of 2 mm) of a thermometry is put under his right hip. Thus, the temperature is determined between the human body and the bedclothes (refer to Figure 10).

### (5) Results

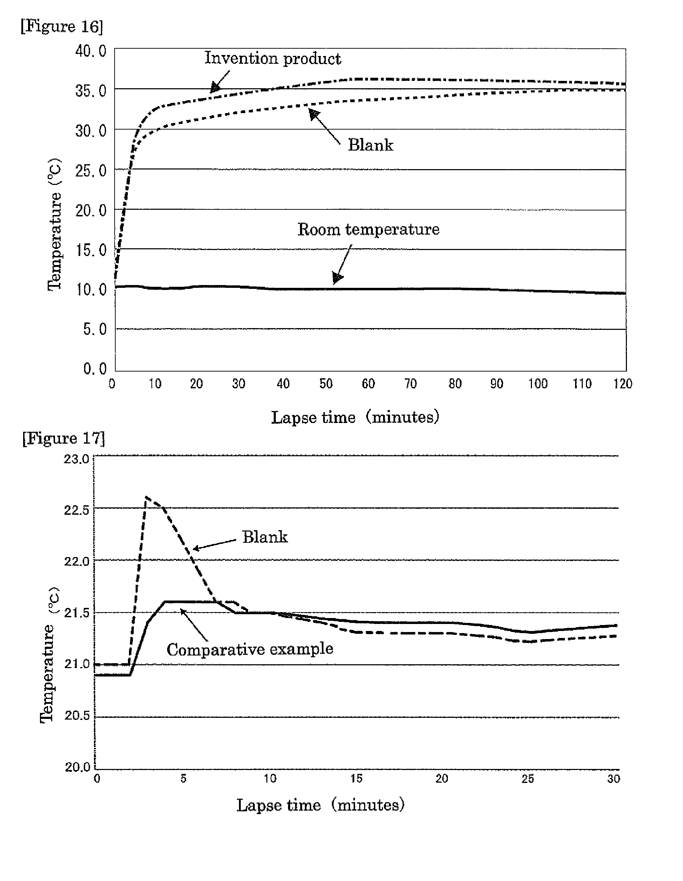

Table 16 and Figure 16 show the results. As is clear from Table 16 and Figure 16, when the bedclothes made of the thermal structures according to the present invention were used, the temperature between a human body and the bedclothes came higher as compared to Blank, about 5 minutes after the start of the examination. Even 2 hours after the start of the examination, the temperature of the case where the bedclothes made of the thermal structures according to the present invention were used was higher.

**[Table 16]**

| (Unit: °C) | | | | | | | | | | |
|---|---|---|---|---|---|---|---|---|---|---|
| | Lapse time (minutes) | | | | | | | | | |
| Examination | 0 | 5 | 10 | 20 | 30 | 40 | 50 | 60 | 90 | 120 |
| Blank | 11.4 | 27.9 | 29.7 | 31.3 | 32.0 | 32.8 | 33.2 | 33.8 | 34.6 | 35.0 |
| Invention product | 11.7 | 29.2 | 32.4 | 33.8 | 34.5 | 35.3 | 35.9 | 36.3 | 36.3 | 36.0 |
| Room temp. | 10.2 | 10.1 | 9.9 | 10.1 | 10.1 | 10.1 | 10.2 | 10.1 | 10.0 | 9.9 |

### [Example 13] Determination of temperature change by heat that is generated from multi-layered sheet by moisture absorption (No. 6)

A multi-layered sheet (a sample of a comparative example) was made, in which the moisture-permeable base material was a polyester · cotton blended fabric and the moisture-permeable resin was an acrylic resin comprising a powder of cellulose that had not been hydrolyzed, and its temperature change based on heat by moisture absorption was determined.

### (1) Materials that were used

### (a) Moisture-permeable base material

For both the sample of a comparative example and Blank, a polyester · cotton blended fabric (polyester 65%, cotton 45%, 45 × 45/110 × 76) was used.

### (b) Composition that was used to form layer of moisture-permeable resin

One that was prepared by mixing a powder of cellulose that had not been hydrolyzed (manufactured by Izumi-Senko Co., Ltd.; apparent specific gravity = 0.4 g/cm³; average particle size = about 60 µm) with Acrylic binder XE-3773 (containing toluene (a solvent), solid component concentration = 16-18%) of Tohpe Corporation that was an acrylic resin adhesive

### (2) Process for preparing multi-layered sheet of comparative example

(i) A powder of cellulose that has not been hydrolyzed, 60 g, is measured out. Toluene, 60 g, is added to the powder, and the obtained mixture is left until the toluene soaks into the powder.
(ii) An acrylic resin adhesive, 240 g, is measured out. The powder of cellulose (one that has not been hydrolyzed) comprising toluene that was prepared in step (i) is added to the adhesive. The obtained mixture is fully mixed to prepare a composition that will be used to form a layer of a moisture-permeable resin. The moisture-permeable resin that will be formed from this composition comprises 42 to 39 mass % of a resin that adheres to a moisture-permeable base material and 58 to 61 mass % of the powder of cellulose (one that has not been hydrolyzed).
(iii) The composition that was prepared in step (ii) is applied onto one surface of a moisture-permeable base material in an amount of 200 g/m².
(iv) The composite body thus obtained is naturally dried for a day and a night, and then dried at 40°C for 2 hours.

In the thus-prepared multi-layered sheet (namely, one after drying), the amount of the powder of cellulose (one that has not been hydrolyzed) was about 33.3 g/m².

### (3) Measuring method

### Method B (improved method) for determination of heat by moisture absorption of Kaken test center of general incorporated foundation

Please see http://www.kaken.or.jp/research/2002/theme2002-08.html

### (3-1) Conditions for determination

Measuring time: 30 minutes
Temperature in the examination room: 20 ± 2°C
Humidity: 40%RH at start and 90%RH during humidifying (during determination)
Side that is used for determination: the side of the moisture-permeable resin for the multi-layered sheet of the comparative example
Washing treatment: None

### (3-2) Brief summary of measuring method

(i) Dry air is supplied into a reaction container in which a polyester · cotton blended fabric as a blank sample or a multi-layered sheet of a comparative example has been put to be the humidity of 40%RH in the container.
(ii) Two hours after the humidity became constant (40%RH), supply of saturated water vapor starts.
(iii) From the start of the supply of the saturated water vapor, the temperature of the surface (the side of the moisture-permeable resin for the multi-layered sheet of the comparative example) of the sample is determined with time.

### (4) Results

Tables 17 and 18 and Figure 17 show the results. The temperature of Blank arrived at maxim in a short while (about 3 minutes) after the start of the examination, and then rapidly decreased. About the multi-layered sheet of the comparative example, the time that was required to arrive at the maxim temperature was longer (about 4 minutes) than that of Blank, and the maxim temperature was 1.3°C lower than that of Blank.

The temperature of Blank decreased and about 8 minutes after the start of the examination, it arrived at the same temperature as that of the maxim temperature of the multi-layered sheet of the comparative example. Thereafter, temperature changes of Blank and the multi-layered sheet of the comparative example were nearly identical.

As is clear from the comparison of Figures 12 (Example 7) and 17, the multi-layered sheet of the present invention having a layer of a moisture-permeable resin comprising a powder of hydrolysate of cellulose showed a maxim temperature that was higher than that of Blank, and maintained temperatures that were higher than those of Blank until the expiration of the examination. Meanwhile, the multi-layered sheet of the comparative example having a layer of a moisture-permeable resin comprising the powder of cellulose that had not been hydrolyzed showed temperatures that were lower than those of Blank during the examination. It became clear that by using a hydrolyzed cellulose powder as a powder that was added to the moisture permeable resin, the effect of temperature increasing based on heat by moisture absorption was attained.

**[Table 17]**

| (Unit: °C) | | | | | | | | | | | | | | | |
|---|---|---|---|---|---|---|---|---|---|---|---|---|---|---|---|
| | Lapse time (minutes) | | | | | | | | | | | | | | |
| Examination | 0 | 1 | 2 | 3 | 4 | 5 | 6 | 7 | 8 | 9 | 10 | 15 | 20 | 25 | 30 |
| Powder of cellulose that has not been hydrolyzed | 20.9 | 20.9 | 20.9 | 21.4 | 21.6 | 21.6 | 21.6 | 21.6 | 21.5 | 21.5 | 21.5 | 21.4 | 21.4 | 21.3 | 21.4 |
| Blank | 21.0 | 21.0 | 21.0 | 22.6 | 22.5 | 22.2 | 21.9 | 21.8 | 21.6 | 21.5 | 21.5 | 21.3 | 21.3 | 21.2 | 21.3 |

**[Table 18]**

| | Initial temp. | Max. temp. | Increased temp. | Difference from Blank |
|---|---|---|---|---|
| Powder of cellulose which has not been hydrolyzed | 20.9°C | 21.6°C | 0.7°C | - 0.9°C |
| Blank | 21.0°C | 22.6°C | 1.6°C | - |

### [Example 14] Determination of temperature change by heat that is generated from multi-layered sheet by moisture absorption (No. 7)

Multi-layered sheets were made, in which the moisture-permeable base material was a polyester · cotton blended fabric and the moisture-permeable resins were acrylic resins comprising a powder of wool that had not been hydrolyzed and a powder of wool that had been hydrolyzed, respectively, and their temperatures were determined with time.

### (1) Materials that were used

(a) Moisture-permeable base material: a polyester · cotton blended fabric (polyester 65%, cotton 45%, 45 × 45/110 × 76)
(b) Compositions that were used to form layer of moisture-permeable resins

One that was prepared by mixing a powder of wool (apparent specific gravity = 0.7 g/cm³; average particle size = about 80 µm) that had been subjected to degreasing and active carbon treatment and that had not been subjected to hydrolysis treatment or the powder of wool (same as that used in Example 10) that had been subjected to degreasing and active carbon treatment and hydrolysis treatment with Acrylic binder XE-3773 (containing toluene (a solvent), solid component concentration = 16-18%) of Tohpe Corporation that was an acrylic resin adhesive

### Process for preparing multi-layered sheets

(i) A powder of wool that has not been subjected to hydrolysis treatment or a powder of wool that had been subjected to hydrolysis treatment, 30 g, is measured out. Toluene, 30 g, is added to the powder, and the obtained mixture is left until the toluene soaks into the powder.
(ii) An acrylic resin adhesive, 240 g, is measured out. The powder of wool comprising toluene that was prepared in step (i) is added to the adhesive. The obtained mixture is fully mixed to prepare a composition that will be used to form a layer of a moisture-permeable resin. The moisture-permeable resin that will be formed from this composition comprises 56 to 59 mass % of a resin that adheres to a moisture-permeable base material and 44 to 41 mass % of the powder of wool.
(iii) The composition that was prepared in step (ii) is applied onto one surface of a moisture-permeable base material in an amount of 200 g/m².
(iv) The composite body thus obtained is naturally dried for a day and a night, and then dried at 40°C for 2 hours. From the composite body a sample having a size of 30 cm × 24 cm is clipped. The clipped one will be used as a sample for determination.

In the thus-prepared multi-layered sheet (namely, one after drying), the amount of the powder of wool was about 20 g/m².

### (3) Measuring instruments and conditions for determination

Thermo-hygrostat: HUMIDIC CHAMBER IG-42M, manufactured by Yamato Scientific Co., Ltd.
Thermometer: µR1800 automatic temperature recorder, manufactured by Yokogawa Meters & Instruments Corporation
Conditions for determination: 30°C, 90%RH

### (4) Measuring method

Each of Samples was alternately folded so that the length of one side comes to be 1/4, thus obtaining a structure having a size of 7.5 cm×6 cm and having 16 layers. A thermometer is tucked into the midst site in thickness (namely, between the lower surface of the 8th layer from the top and the upper surface of the 8th layer from the bottom) of the structure having 16 layers. The structures are put into the thermo-hygrostat, of which conditions have been set at 30°C and 90%RH, and the temperature of each structure is determined with time.

### (5) Results

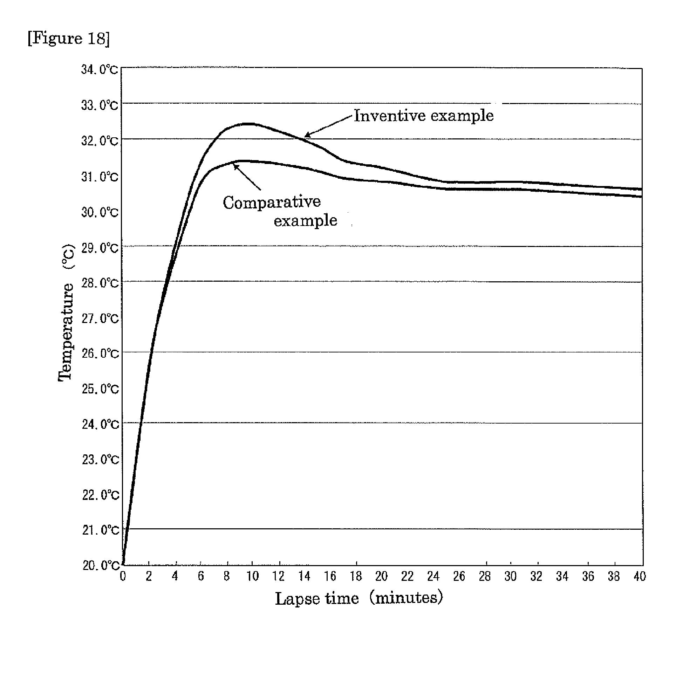

Table 19 and Figure 18 show the results. As is clear from Table 19 and Figure 18, the multi-layered sheet (inventive example) in which a layer of a resin comprising a powder of wool that had been subjected to hydrolysis treatment was formed showed higher temperature increasing based on heat by moisture absorption, as compared with the multi-layered sheet (comparative example) in which a layer of a resin comprising a powder of wool that had not been subjected to hydrolysis treatment was formed. Specifically, about 10 minutes after the start of the examination, the temperature of the inventive sample arrived at maxim that was 1.0° C higher than that of the comparative example, and 40 minutes after the start of the examination, too, the temperature was maintained higher than that of the comparative example.

**[Table 19]**

| (Unit: °C) | | | | | | | | | | | | | |
|---|---|---|---|---|---|---|---|---|---|---|---|---|---|
| | Lapse time (minutes) | | | | | | | | | | | | |
| Examination | 0 | 2 | 4 | 6 | 8 | 10 | 12 | 15 | 17 | 20 | 25 | 30 | 40 |
| Powder of wool that has not been hydrolyzed | 19.4 | 25.8 | 28.7 | 30.8 | 31.3 | 31.4 | 31.3 | 31.1 | 30.9 | 30.8 | 30.6 | 30.6 | 30.4 |
| Powder of hydrolysate of wool | 19.8 | 25.6 | 29.1 | 31.4 | 32.3 | 32.4 | 32.2 | 31.8 | 31.4 | 31.2 | 30.8 | 30.8 | 30.6 |

### Explanation of symbols

- 1: layer of moisture-permeable base material
- 1a: knit fabric, woven fabric, or non-woven fabric
- 1b: moisture-permeable polymer film (II)
- 1c: layer of moisture-permeable adhesive
- 3, 3x, 3y: layer of moisture-permeable resin
- 5: moisture-permeable polymer film (I)
- 7a: knit fabric, woven fabric, or non-woven fabric
- 7b: layer of moisture-permeable adhesive
- 31: resin that adheres to moisture-permeable base material
- 33: powder of hydrolysate of cellulose
- 35: aluminum powder
- 100, 200, 300, 400, 500, 600: multi-layered sheet

## Claims

1. A multi-layered sheet **characterized by** comprising a layer of a moisture-permeable base material and a layer(s) of a moisture-permeable resin which has(have) been formed on at least one surface of the layer of the moisture-permeable base material, wherein the moisture-permeable resin may also be found inside the layer of the moisture-permeable base material and the moisture-permeable resin comprises a resin that adheres to the moisture-permeable base material and a water-insoluble powdery or granular material that generates heat by moisture absorption and that is hydrolysate of a substance derived from a plant and/or hydrolysate of a substance derived from an animal, wherein in the total amount of the moisture-permeable resin, the amount of the resin that adheres to the moisture-permeable base material is 20 to 80 mass % and the amount of the water-insoluble powdery or granular material that generates heat by moisture absorption is 80 to 20 mass %.

2. The multi-layered sheet according to claim 1, wherein the amount of the water-insoluble powdery or granular material that generates heat by moisture absorption is 5 to 100 g/m².

3. The multi-layered sheet according to claim 1 or 2, wherein the water-insoluble powdery or granular material that generates heat by moisture absorption is a powder of hydrolysate of cellulose.

4. The multi-layered sheet according to claim 1 or 2, wherein the water-insoluble powdery or granular material that generates heat by moisture absorption is a powder of hydrolysate of a protein that is derived from an animal.

5. The multi-layered sheet according to anyone of claims 1 to 4, wherein the resin that adheres to the moisture-permeable base material is an acrylic resin.

6. The multi-layered sheet according to anyone of claims 1 to 5, further comprising a moisture-permeable polymer film (I) on one or both surface(s) of the layer(s) of the moisture-permeable resin.

7. The multi-layered sheet according to claim 6, wherein the moisture-permeability (JIS K7129, Method A; Lyssy Method) of the moisture-permeable polymer film (I) is 400 g/m²/24 hours or above.

8. The multi-layered sheet according to claim 6 or 7, wherein the moisture-permeable polymer film (I) is a moisture-permeable polyurethane film.

9. The multi-layered sheet according to anyone of claims 6 to 8, further comprising a knit fabric, a woven fabric, or a moisture-permeable non-woven fabric outside one or both moisture-permeable polymer film(s) (I), wherein between the polymer film (I) and the knit fabric, the woven fabric, or the moisture-permeable non-woven fabric there is a layer of a moisture-permeable adhesive.

10. The multi-layered sheet according to anyone of claims 1 to 5, further comprising a knit fabric, a woven fabric, or a moisture-permeable non-woven fabric on one or both surface(s) of the layer(s) of a moisture-permeable resin.

11. The multi-layered sheet according to anyone of claims 1 to 10, wherein the moisture-permeable resin further comprises an aluminum powder in an amount of 40 mass% or less of the total amount of the moisture-permeable resin.

12. A thermal structure comprising a multi-layered sheet according to anyone of claims 1 to 11.

13. A process for producing a multi-layered sheet **characterized by** comprising a step of applying to a moisture-permeable base material a composition comprising a resin that adheres to the moisture-permeable base material or a precursor of the resin and a water-insoluble powdery or granular material that generates heat by moisture absorption and that is hydrolysate of a substance derived from a plant and/or hydrolysate of a substance derived from an animal in an amount of 10 to 200 g/m² and a step of forming a moisture-permeable resin by setting the resin that adheres to the moisture-permeable base material or by curing the precursor of the resin, wherein the moisture-permeable resin thus formed comprises, in the total amount of it, the resin that adheres to the moisture-permeable base material in an amount of 20 to 80 mass % and the water-insoluble powdery or granular material that generates heat by moisture absorption in an amount of 80 to 20 mass %.

14. The process for producing a multi-layered sheet according to claim 13, wherein the step of applying the composition is performed by a machine-coating and the amount of the application is 10 to 50 g/m².
